# EUROPEAN PATENT SPECIFICATION

(11) **EP 1 503 356 B1**
(45) Date of publication and mention of the grant of the patent: **29.11.2006**
(21) Application number: 04253953.6
(22) Date of filing: 30.06.2004
(51) Int. Cl.: G08G 1/0968, G01C 21/34

(54) **Device, system, method and program for notifying traffic condition and recording medium storing such program**
Vorrichtung, System, Verfahren und Programm zur Meldung des Verkehrszustands und Aufzeichnungsmedium das Programm speichernd
Appareil, système, procédé et programme pour la notification de l'état du trafic et support d'enregistrement du programme

(30) Priority: 30.07.2003 JP 2003203969
(43) Date of publication of application: 02.02.2005
(73) Proprietor: Pioneer Corporation, Tokyo 153-8654 (JP); Increment P Corporation, Tokyo 153-8665 (JP)
(72) Inventor: Takenaga, Takashi, Meguro-ku Tokyo 153-8665 (JP); Amano, Kouji, Meguro-ku Tokyo 153-8665 (JP)
(74) Representative: Haley, Stephen

(56) References cited:
- EP-A- 1 422 501
- US-A- 5 428 545
- US-A1- 2001 029 425
- US-A1- 2004 073 361
- US-B1- 6 317 686

## Description

The present invention relates to a device, a system, a method and a program for notifying the traffic condition of a moving object as well as to a recording medium storing such a program.

Vehicle navigation devices adapted to acquire traffic information (VICS data) on vehicle accidents, traffic jams and so on from a vehicle information communication system (VICS) and superimpose the acquired traffic information (on vehicle accidents, traffic jams and so on) on a map being displayed on a display unit for the purpose of notifying a vehicle user (driver) of the information are conventionally known. Meanwhile, when a traffic jam occurs, drivers who want to avoid the traffic jam may make a detour to consequently give rise to a secondary traffic jam. Because the VICS data provides only the current traffic condition, drivers who make a detour, seeing the current traffic condition provided by the system, can be engulfed in a secondary traffic jam. Thus, there is a demand for improved vehicle navigation device that allows drivers to avoid traffic jams and take the best route to get to the destination.

On the other hand, vehicle navigation device adapted to predict the traffic condition for now and in the future by using statistic data on traffic jams obtained by statistically processing information on past traffic jams and notify users of the predicted traffic condition for now and in the future are known (see, Japanese Patent Laid-Open Publication No. Hei.9-113290, p. 3, right column to p. 7, left column). The vehicle navigation device described in the above cited patent document is adapted to provide a vehicle user (driver) with statistic traffic jam information as classified on the basis of the days of the week and the time zones of a day by superimposing the statistic traffic jam information on the map being displayed on the display unit. Thus, the vehicle user (driver) can predict the traffic jams that can take place now and those that can take place in the future according to the traffic jam information for the day of the week and the information for the future.

US-B-63176861 discloses a traffic condition notifying device with a traffic information acquirer.

With the vehicle navigation device as disclosed in the above cited patent document, the traffic jam information of which the vehicle user (driver) is notified is obtained by statistically processing traffic jam information in the past and hence based on the statistic traffic jam information of the past and only tells statistic facts on the traffic jams in a specific time zone on a specific day of the week. In other words, the vehicle user (driver) cannot recognize how the current traffic jams, if any, will progress with time. Additionally, the vehicle user (driver) may not have to make a detour if the current traffic jam on the road ahead is dissolved before the vehicle gets there. Thus, the vehicle user (driver) needs to recognize how the current traffic jams will progress with time in order for the vehicle to move smoothly to the destination. Then, the vehicle user (driver) needs to be notified of statistic information on traffic jams before and after the time zone and selects the route to take on the basis of the statistic information. However, it will be cumbersome for the vehicle user (driver) to recognize how the current traffic jams will progress with time.

It is a principal object of the present invention to provide a device, a system, a method and a program for notifying the traffic condition to easily recognize how the traffic condition will progress as well as to a recording medium storing such a program.

In an aspect of the present invention, the above object is achieved by providing a traffic condition notifying device comprising:
a traffic condition notifying device comprising:
   a map information acquirer for acquiring map information;
   a traffic information acquirer for acquiring traffic information on traffic conditions of predetermined area surrounding the current position of a moving body;
   a request information recognizer for recognizing a request for predicted traffic jam information to display a transition of the traffic condition; and
   a display unit for displaying the map information, characterized by
   a display controller arranged to control the display unit to continually display the map information and the traffic information at plural predetermined time points in a superimposing manner when the request information recognizer recognizes the request for predicted traffic jam information.

In still another aspect of the present invention, there is provided a traffic condition notifying system including: a server unit having a storage for storing map information; and the above-described traffic condition notifying system and adapted to acquire the map information from the server unit via a network.

In the above traffic condition notifying system according to the present invention, preferably the terminal unit further includes a map information acquirer for acquiring the map information from the server unit via the network and the display controller of the terminal unit is adapted to display map information acquired by the map information acquirer as a map and superimpose the traffic information on the traffic condition at predetermined time intervals on the map being displayed on the display unit with predetermined time intervals.

In still another aspect of the present invention, there is provided a traffic condition notifying method comprising the steps of:
acquiring map information and traffic information on a the traffic conditions of a predetermined area surrounding the current position of a moving body; and
continually displaying the map information superimposed by traffic information at plural time points on a display unit by recognizing a request for predicted traffic jam information to display the transition of the traffic condition.

In still another aspect of the present invention, there is provided a traffic condition notifying program executing the above traffic condition notifying method by a computer.

In a further aspect of the present invention, there is provided a recording medium storing the above traffic condition notifying program in a manner readable by a computer.
FIG. 1 is a schematic block diagram of a first embodiment of traffic condition notifying device according to the present invention, which is a vehicle navigation device, showing the configuration thereof;
FIG. 2 is a schematic conceptual illustration of a table structure of data to be displayed on a map of the first embodiment;
FIG. 3 is a schematic conceptual illustration of a table structure of matching data to be displayed on the map of the first embodiment;
FIG. 4 is a schematic conceptual illustration of a table structure of data in a traffic jam prediction table of the first embodiment;
FIG. 5 is a schematic conceptual illustration of a table structure of data in a calendar template of the first embodiment;
FIG. 6 is a schematic block diagram showing the configuration of a processor of the vehicle navigation device of the first embodiment;
FIG. 7 is a flow chart of the operation of modifying a calendar template of the first embodiment;
FIG. 8 is a schematic conceptual illustration of the table structure of data in the calendar template as updated by the calendar modifying section of the first embodiment;
FIG. 9 is a flow chart of the operation of searching for a traveling route of the first embodiment;

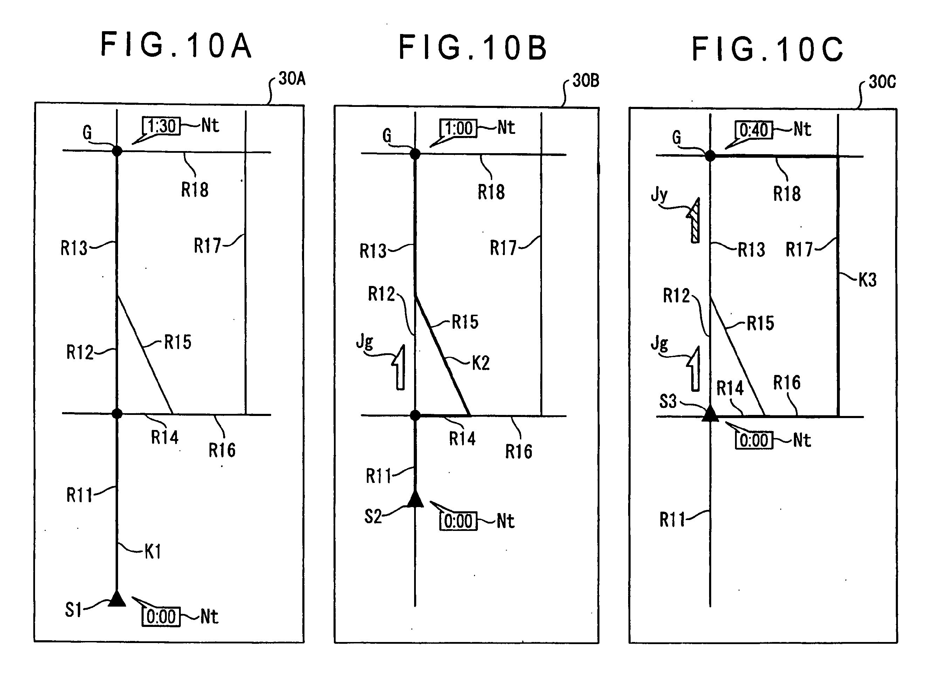

FIGS. 10A through 10C are schematic illustrations of images of the traveling route that can be displayed by the first embodiment, in which FIG. 10A is a schematic illustration of an image that can be displayed when the embodiment searches for a traveling route to a selected position, FIG. 10B is a schematic illustration of an image that can be displayed when the embodiment re-searches for a traveling route to the position when a predetermined time period has elapsed from FIG. 10A, and FIG. 10C is a schematic illustration of an image that can be displayed when the embodiment re-searches for a traveling route to the position when a predetermined time period has elapsed from FIG. 10B;
FIG. 11 is a schematic conceptual illustration of a navigation image displayed on a terminal display of the first embodiment;
FIG. 12 is a schematic conceptual illustration of the navigation image where an icon legend window is displayed by the first embodiment;
FIG. 13 is a schematic conceptual illustration of a navigation preview image displayed on the terminal display of the first embodiment after an elapse of 30 minutes;
FIG. 14 is a schematic conceptual illustration of the navigation preview image displayed on the terminal display of the first embodiment after an elapse of 60 minutes;
FIG. 15 is a schematic conceptual illustration of the navigation preview image displayed on the terminal display of the first embodiment after an elapse of 90 minutes;
FIG. 16 isa schematic block diagram of a second embodiment of traffic condition notifying device according to the present invention, which is a vehicle navigation system, showing the configuration thereof;
FIG. 17 is a schematic block diagram of a terminal unit of the second embodiment;
FIG. 18 is a schematic block diagram of a processor of the terminal unit of the second embodiment;
FIG. 19 is a schematic block diagram of a server unit of the second embodiment;
FIG. 20 is a schematic block diagram of a CPU of the server unit of the second embodiment;
FIG. 21 is a flow chart of the operation of modifying a calendar template of the second embodiment; and
FIG. 22 is a flow chart of the operation of searching for a traveling route of the second embodiment.

### [1st Embodiment]

Now, the first embodiment of the present invention will be described by referring to the accompanying drawings. This embodiment of traffic condition notifying device is a navigation device for navigating, for example, a moving body, or a vehicle, in response to the moving condition thereof. However, it should be noted that a traffic condition notifying device according to the present invention is not necessarily arranged in a vehicle. It can be arranged in any moving body in order to notify the driver of the moving body of the traffic condition thereof.

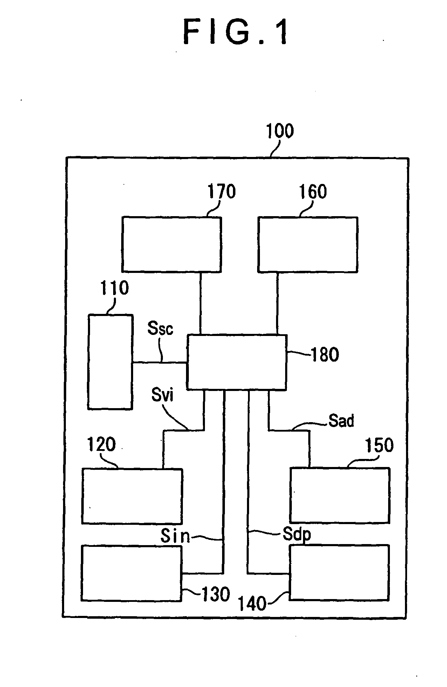

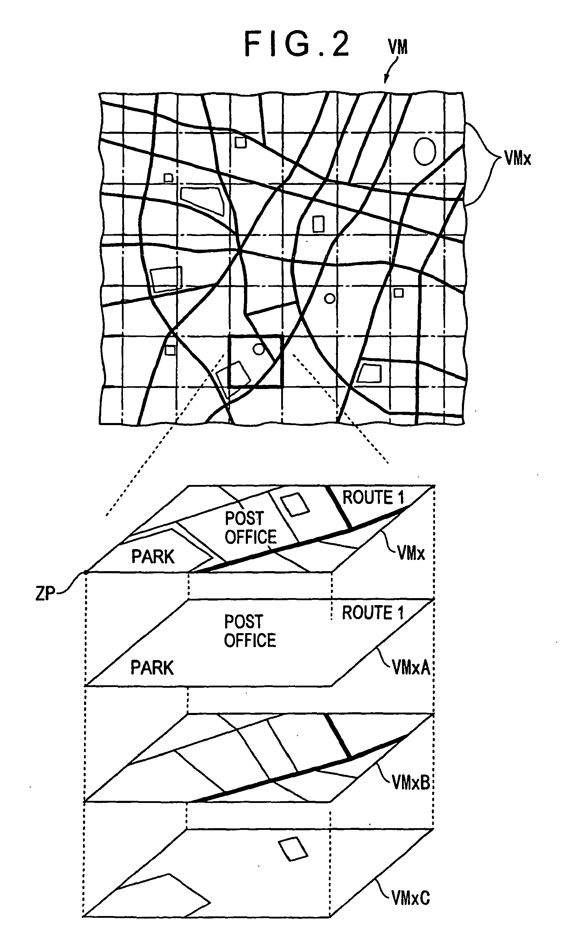

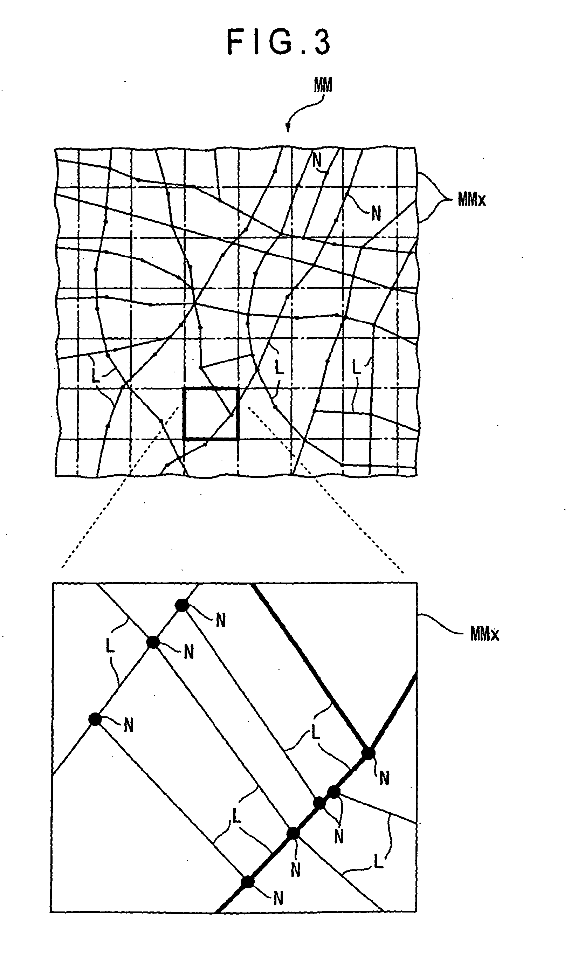

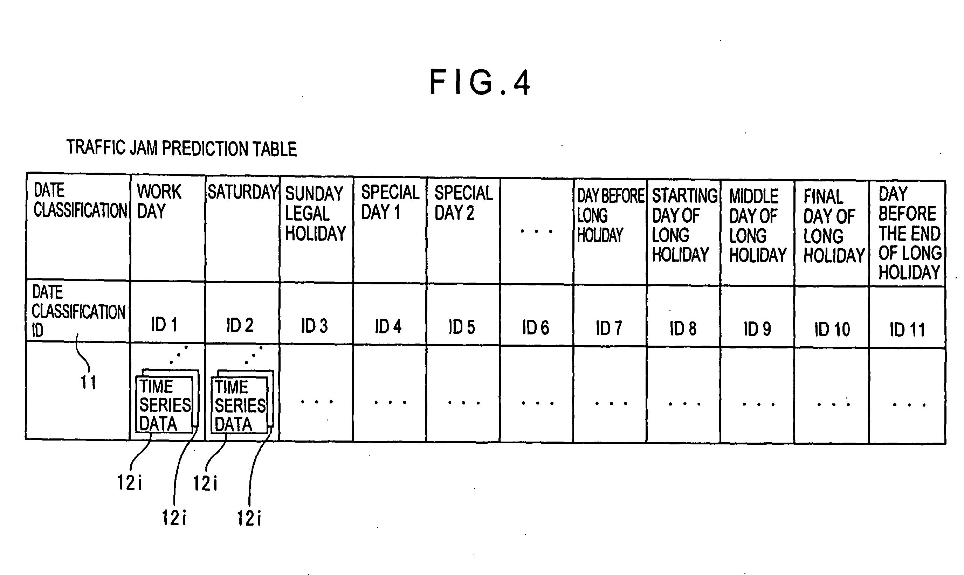

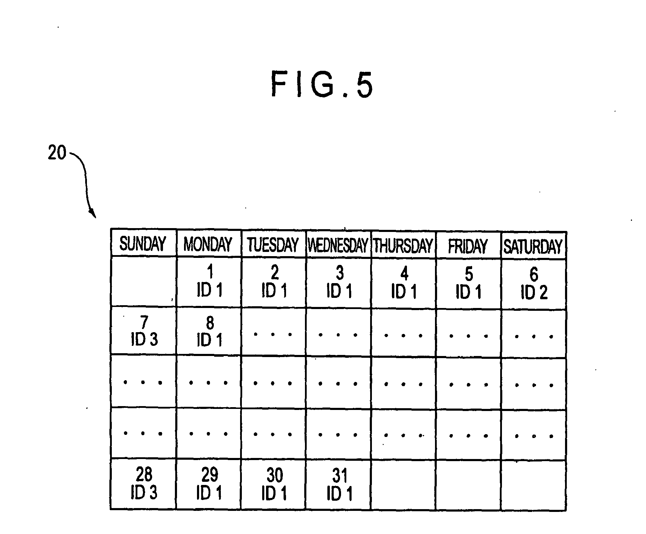

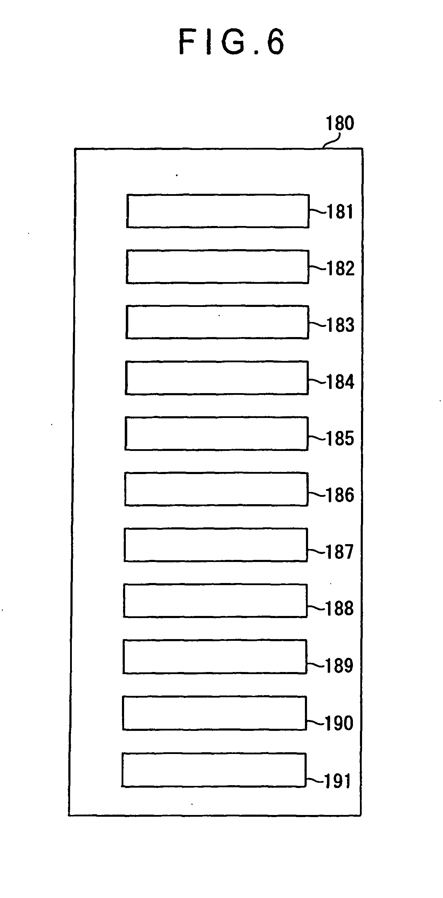

FIG. 1 is a schematic block diagram of the first embodiment of a navigation device, showing the configuration thereof. FIG. 2 is a schematic conceptual illustration of a table structure of data to be displayed on a map. FIG. 3 is a schematic conceptual illustration of the table structure of matching data to be displayed on the map. FIG. 4 is a schematic conceptual illustration of the table structure of data in a traffic jam prediction table. FIG. 5 is a schematic conceptual illustration of the table structure of data in a calendar template. FIG. 6 is a schematic block diagram showing the configuration of a processor of the navigation device.

### [Configuration of navigation device]

In FIG. 1, reference symbol 100 denotes a navigation device that is a traffic condition notifying device. The navigation device 100 is adapted to navigate a user (driver) of a vehicle, or a moving body in response to the moving condition of the vehicle. However, for the purpose of the present invention, a moving body is not limited to a vehicle and may alternatively be an aircraft or a ship. The navigation device 100 may be realized in the form of a vehicle-mounted type device to be mounted in a vehicle, a portable type device, a PDA (personal digital assistant), a portable phone, a PHS (personal handyphone system), a personal computer or the like. The navigation device 100 searches for information on the current position and the destination on the basis of the maps it has. It also searches for and displays the route to the destination as well as a predetermined store that is located in the vicinity of the current position of the vehicle and operates as landmark, including the services the store provides. As shown in FIG. 1, the navigation device 100 includes a sensor 110, a VICS (vehicle information communication system) receiver 120 that operates as a traffic information acquirer, a terminal input section 130, a terminal display 140 that is a display device, a voice output section 150, a storage 160, a memory 170, a processor 180 and so on.

The sensor 110 detects the moving condition of the moving body on which it is mounted, which may be a vehicle, including the current position and the running condition of the vehicle, and outputs signal Ssc of a predetermined format that represents the moving condition to the processor 180. The sensor 110 typically has various sensors including a GPS (global positioning system) receiver (not shown), a speed sensor (not shown), an azimuth sensor and acceleration sensor.

The GPS receiver receives the electric navigation wave output from the GPS satellite (not shown), which is an artificial satellite, by a GPS antenna (not shown). It then computes the assumed coordinate values of the current position according to the received signal of the electric navigation wave and outputs the outcome of the computation to the processor 180 as GPS data.

The speed sensor of the sensor 110 is arranged on the moving body, which may be a vehicle, to detect the running speed and the actual acceleration of the vehicle according to a signal that varies as a function of the running speed, or the moving speed, of the vehicle. The speed sensor typically reads the pulse signal and/or the voltage value that is output according to the revolutions per unit time of the axles or the wheels of the vehicle. Then, the speed sensor outputs the detected information, or the pulse signal and/or the voltage value it reads, to the processor 180. The azimuth sensor of the sensor 110 is also arranged on the vehicle and has a gyro-sensor (not shown) to detect the azimuth of the vehicle, or the running direction of the forwardly moving vehicle. The azimuth sensor outputs a signal representing the detected running direction to the processor 180. The acceleration sensor of the sensor 110 is also arranged on the vehicle to detect the acceleration of the vehicle in the running direction thereof. The acceleration sensor typically converts the detected acceleration into a sensor output value in the form of a pulse or a voltage and outputs it to the processor 180.

The VICS receiver 120 has a VICS antenna (not shown) and acquires traffic information by the antenna. More specifically, it acquires traffic information (to be referred to as VICS data hereinafter) on traffic jams, traffic accidents, road construction works, traffic control operations and so on from the VICS (not shown) by way of a beacon or FM multiplex broadcasting and outputs a signal Svi of a predetermined format relating to the acquired traffic information to the processor 180.

VICS data has a table structure typically containing a plurality of conceptual items that are coordinated into a single data as shown below.
· traffic jam rating: traffic jams, congestions, smooth traffic, etc.
· leading position of each traffic jam
· length of each traffic jam
· link traveling time information: the traveling time necessary for the vehicle to run between two consecutive traffic lights, which is a VICS link
road section traveling time information: the traveling time necessary for the vehicle to run by a given road section that is longer than the distance of a VICS link
· restrictions, causes of restrictions, restricted road sections
· information on vacancies or the like in parking areas
· information on service areas and parking areas
· other information

The terminal input section 130 typically includes a keyboard and a mouse as well as various operation buttons and operation knobs (not shown) to be used for input operations. The operation buttons and the operation knobs are used to specify operations of the navigation device 100. More specifically, they may be used to specify the type of information to be acquired and/or the requirements to be met when acquiring information, to specify the destination, to retrieve information and to cause the running condition, or the moving condition of the moving body, to be displayed on the terminal display. In response to an input operation, the terminal input section 130 outputs a predetermined signal Sin to the processor 180. In addition to or in place of the operation buttons and the operation knobs, the terminal input section 130 may include a touch panel that may be arranged at the terminal display 140 for input operations and a voice input section.

The terminal display 140 is controlled by the processor 180 and adapted to display images for signal Sdp from the processor 180. Images that are displayed on the terminal display 140 include maps and images of retrieved information, TV programs received by a TV receiver (not shown), images stored in one or more than one external devices such as optical disks, magnetic disks, memory cards and other recording mediums and read by respective drives or drivers and images from memory 170. The terminal display 140 may typically include a liquid crystal panel, an organic EL (electro luminescence) panel, a PDP (plasma display panel) or a CRT (cathode ray tube).

The voice output section 150 includes a speaker or some other sounding unit (not shown). The voice output section 150 is controlled by the processor 180 and outputs voices by the sounding unit for various signals Sad from the processor 180 including those for voice data. Voiced information output from the voice output section 150 includes the running direction and the running condition of the vehicle, the traffic condition and so on. A driver or passenger is notified of and navigated by the voiced information. The sounding unit may be used to output TV sounds received by a TV receiver and sounds stored in the memory 170. The voice output section 150 may additionally utilize some other sounding unit with which the vehicle is provided as standard equipment.

The storage 160 readably stores map information for maps as shown in FIGS. 2 and 3 and a traffic jam prediction table 10 as shown in FIG. 4. The storage 160 includes a map storage area for storing maps and a traffic jam prediction table storage area for storing the traffic jam prediction table 10. However, the storage 160 does not necessarily have the two storage areas that are specifically described above and may not include any one of the above-described storage areas or may include some other storage areas. The storage 160 may have drives or drivers for readably storing data on storage mediums such as HDs (hard disks), DVDs (digital versatile disks), optical disks and memory cards.

For the purpose of the present invention, map information may include display data VM, which are so-called POI (point of interest) data for maps as shown in FIG. 2, matching data MM for maps as shown in FIG. 3, map data for searching for the traveling route and so on.

Display data VM include a plurality of pieces of display mesh information VMx, each carrying a specific suffix number. More specifically, the map of a given geographical area that is formed by display data VM is vertically and horizontally divided into a plurality of pieces of display mesh information VMx. Each piece of display mesh information VMx may be further divided into a plurality of pieces of display sub-mesh information VMx. The display mesh information VMx are rectangles with same dimensions and show respective geographical strips with a reduced scale. The map is provided at a corner thereof with a geographical index of the entire map, which may be values expressed in terms of an absolute coordinates ZP of the earth.

Each display mesh information VMx contains name information VMxA which designates a name of crossings, road information VMxB and background information VMxC. The name information VMxA are miscellaneous elemental data of the strip, such as name of crossing and name of region, that are arranged in a table structure. They are adapted to be displayed at predetermined respective positions in terms of the absolute coordinates ZP. The road information VMxB are road elemental data of the strip that are arranged in a table structure. They are adapted to be displayed at predetermined respective positions in terms of the absolute coordinates ZP. The background information VMxC include marks of well-known buildings and other spots. They are also miscellaneous elemental data of the strip that are arranged in a table structure and adapted to be displayed at predetermined respective positions in terms of the absolute coordinates ZP.

On the other hand, matching data MM include a plurality of pieces of matching mesh information MMx, each carrying a specific suffix number. More specifically, as in the case of the display data VM, the map of a given geographical area is vertically and horizontally divided into a plurality of matching mesh information MMx. Each of the matching mesh information MMx may be further divided into a plurality of pieces of matching sub-mesh information MMx. The mesh information MMx are rectangles with same dimensions and show respective geographical strips with a reduced scale. The map is provided at a corner thereof with a geographical index of the entire map, which may be values expressed in terms of the absolute coordinates ZP of the earth. Each piece of matching mesh information MMx may have a data structure that is different from that of each piece of display mesh information VMx. In other words, the matching mesh information MMx may have dimensions different from those of the display mesh information VMx. If both the display mesh information VMx and the matching mesh information MMx have the same reduced dimensions, the data of display mesh information VMx and those of the corresponding matching mesh information MMx may be provided with the same and unique number to identify their relationship. If the display mesh information VMx have reduced dimensions different from those of the matching mesh information MMx, the relationship between the data of a display mesh information VMx and those of the corresponding matching mesh information MMx may typically be identified by means of the absolute coordinates.

When, for example, a symbol representing the moving vehicle is superimposed on the map, the matching data MM are used to prevent from being placed not on the road but on a building by error. In other words, the matching data MM are used for map matching processing for placing the symbol of the vehicle on the right road. The matching data MM includes a plurality of pieces of link string block information.

As shown in FIG. 3, link string block information as used herein refers to information having a table structure showing correlations of links L that are line segments, each connecting a pair of nodes N representing respective spots on a road. The correlations of links L are established on the basis of predetermined rules. For example, a road, which may be the Koshu Road or the Ome Road, is expressed as a link string that is formed by a number of mutually correlated broken lines, or links. Each link L is provided with line-segment-specific information (hereinafter, referred to as link ID), that is a suffix number of the link and node information specific to each of the pair of nodes N connected by the link L. Each link L is correlated to VICS links to show positional correspondence between VICS data and a displayed map.

A node N may represent a road crossing, a bending point of a road, a fork of roads or a junction of roads. The information on the node N includes spot-specific-information that is a suffix number of the node N in the link string block information, the coordinates of the position of the node N and a flag that indicates if the node represents a branching position such as a road crossing or a fork of roads, where a plurality of links meet, or not. The information on the node N may alternatively includes only spot-specific-information and coordinates and does not include a flag so that it shows only the profile of each of the links, or roads, related to it. Still alternatively, it may include information on the attributes of the links related to it such as information on the width and the number of lanes of each of the links, or roads, related to it. If the node N does not have a flag and shows only the profile of each of the roads related to it, it will not be used to identify the spot by coordinate matching section 186, which will be described hereinafter

Maps for searching the traveling route of the vehicle typically have a table structure similar to that of the matching data MM. In other words, they have a table structure with spot information on spots on roads as represented by nodes N and link information on line segment information on line segments as represented by links L. They are used for the purpose of searching for the traveling route of the vehicle.

The traffic jam prediction table 10 provides statistic traffic information obtained by statistically processing past traffic conditions in terms of the time zones of a day. It includes data showing traffic conditions of a geographical location in the past. The traffic jam prediction table 10 is used to predict traffic jams when searching for the traveling route or when displaying a map. The traffic jam prediction table 10 has a table structure as shown in FIG. 4, for example, where a plurality of combinations of a date classification ID (identification) 11 and time series data 12i (i being a natural number) are recorded and each of the combinations is referred to as record.

A date classification ID 11 is an ID number specific to a particular date of the year and a particular day of the week. In the following description, classification in terms of dates and days of the week is referred to as date classification. For example, "ID1" may indicate any "workday" between Monday and Friday that is not a legal holiday and "ID2" may indicate "Saturday" that is not a legal holiday, whereas "ID4" may indicate "special day 1" which is a festival day of City A and "ID5" may indicate "special day 2" which is a day when sports matches take place in Athletic Ground B. Similarly, "ID7" may indicate the day before four consecutive holidays, or "the day before a long holiday" and "ID11" may indicate the third day of four consecutive holidays, or "the day before the end of a long holiday". Date classification IDs 11 are not necessarily ID numbers. They may alternatively be text data directly and respectively related to dates such as "workdays".

Time series data 12i are data showing tendencies of traffic jam conditions obtained by statistically processing the data acquired, for example, from the VICS, or VICS data, that are accumulated for each VICS link, for every 10 minutes classified as temporal element by the date classification system. More specifically, time series data 12i may include data showing one or more than one traffic jams at certain locations on each VICS link in predetermined time zones such as the length of each specific one of the traffic jams, the traffic jam ratings or the traffic jam conditions of the traffic jams and the time required for escaping each specific one of the traffic jams. While time series data 12i are described above as data generated by statistically processing data for every time zone that is defined as temporal element by the date classification system, they may not necessarily be limited thereto and may alternatively be generated by using facilities, shops for every administrative unit, which may be a city, a town or a village and/or for every road.

The storage 160 stores retrieval information necessary for acquiring information on a predetermined spot as map information. More specifically, retrieval information include information on the designations of prefectures, cities, towns, villages, districts and areas that are used to pinpoint a spot, guidance information and information on shops that are also used to pinpoint a spot. Retrieval information is stored to show a table structure where pieces of information on items are arranged hierarchically in the form of a tree structure.

The memory 170 readably stores information on specified items that are input at the terminal input section 130, music data and image data as well as a plurality of calendar templates 20 as shown in FIG. 5. The memory 170 also stores various application programs to be developed on the OS (operating system) of the navigation device 100 that controls the operation of the entire navigation device 100. The memory 170 preferably includes a CMOS (complementary metal-oxide semiconductor) memory that retains the data it stores even in the case of black out where the power supply is suddenly interrupted. The memory 170 may alternatively include a drive or a driver for readably storing data on a recording medium such as HD, DVD or optical disk.

The calendar templates 20 are templates showing date classification of dates. More specifically, each calendar template 20 contains table data including dates, classification ID numbers assigned to respective dates and so on and typically a total of twelve calendar templates are provided to correspond to the months of a year so as to form a table structure.

A classification ID number is the same as one of the date classification IDs 11 of traffic jam prediction tables 10 and indicates the date classification of a date specified by date information. For example, in FIG. 5, Friday 5th is classified as "workday" that is identified by "ID 1", whereas Monday 15th is classified as "legal holiday" that is identified by "ID3". The classification ID numbers of the calendar templates 20 may be modified appropriately by the processor 180. The classification ID numbers are not necessary numerical values and may alternatively so arranged as to show a data structure using text data corresponding to the date classification IDs of the traffic jam prediction tables 10 such as "workday".

The processor 180 has various input/output ports (not shown) including a VICS reception port connected to a VICS antenna, a GPS reception port connected to a GPS receiver, sensor ports connected to respective various sensors, a key input port connected to the terminal input section 130, a display control port connected to the terminal display 140, a voice control port connected to the voice output section 150, a storage port connected to the storage 160 and a memory port connected to the memory 170. As shown in FIG. 6, the processor 180 has, as various programs, a current position recognizer 181 which operates as current position acquirer, a destination recognizer 182 which operates as destination information acquirer, a guidance providing section 183, a display controller 184 which also operates as map information acquirer, requests recognizer and traffic map generator, a map matching section 185, a coordinate matching section 186, a traffic jam condition recognizer 187 which also operates as traffic map generator, a route processor 188 which operates as moving-condition-related information generator and traveling route searcher, an information retriever 189, a calendar modifying section 190, a timer 191 and so on.

The current position recognizer 181 recognizes the current position of the vehicle. More specifically, it computationally determines a plurality of assumed current positions of the vehicle on the basis of the speed data and the azimuth data output respectively from the speed sensor and the azimuth sensor of the sensor 110. Additionally, the current position recognizer 181 recognizes the current assumed coordinate values of the vehicle on the basis of the GPS data relating to the current position as output from the GPS receiver. Then, the current position recognizer 181 compares the computationally determined assumed current position and the current assumed coordinate values of the vehicle it recognizes and computationally determines the current position of the vehicle on the map acquired separately to recognize the current position of the vehicle.

Furthermore, the current position recognizer 181 determines the inclination and the level difference of the road on which the vehicle is running on the basis of the acceleration data output form the acceleration sensor and computationally determines the assumed current position of the vehicle to recognize the current position of the vehicle. Thus, it can accurately recognize the current position of the vehicle even at a spot where two or more than two roads intersect each other on a plan view such as a multi-level crossing of an ordinary road or a high way. Additionally, when the vehicle is running on a slope or a mountain road, it corrects the error of the moving distance obtained only on the basis of the speed data and the azimuth data that differs from the actual running distance of the vehicle by taking the detected inclination of the road into consideration to accurately recognize the current position of the vehicle.

The current position recognizer 181 can recognize the starting point that is selected and input by the terminal input section 130 also as assumed current position in addition to the above described current position of the vehicle. The various pieces of information acquired by the current position recognizer 181 are stored appropriately in the memory 170.

The destination recognizer 182 typically acquires destination information on the destination of the vehicle as selected and input by operating the terminal input section 130 and recognizes the position of the destination. Pieces of information on the destination that can be selected and input include the coordinate values of the destination as expressed in terms of latitude and longitude, the address of the destination, or the telephone number of the telephone at the destination if they can be used to locate the destination. The destination information recognized by the destination recognizer 182 is appropriately stored in the memory 170.

The guidance providing section 183 provides guidance for driving the vehicle to support the driver on the basis of the information on the traveling route and the information on the map guidance information acquired in advance in response to the running condition of the vehicle and stored in the memory 170. The guidance may be provided in the form of images displayed on the terminal display 140 and/or in voice sounded by the voice output section 150. For example, a predetermined arrow and/or a sign may be displayed on the display screen of the terminal display 140 and/or a voice guidance such as "Turn right toward XX at YY crossing 700 m ahead", "The vehicle deviated from the traveling route" or "A traffic jam is ahead" may be sounded from the voice output section 150.

The display controller 184 appropriately controls the terminal display 140 so as to cause it to display various pieces of information on the terminal display 140. The display controller 184 also controls the terminal display 140 to display images for prompting the user to operate the terminal input section 130 so as to select and input various pieces of information.

The map matching section 185 operates for map matching processing necessary for displaying the current position of the vehicle as recognized by the current position recognizer 181 on the map obtained from the storage 160. The map matching section 185 typically utilizes matching data MM for map matching processing of modifying or correcting the information on the current position so that the current position of the vehicle as indicated by a mark that is superimposed on the map being displayed on the terminal display 140 may not be shifted from the road in the map on the terminal display 140.

The coordinate matching section 186 operates for coordinate matching processing necessary for determining if the pieces of information on two nodes N contained in the matching data MM of the map information obtained from the storage 160 as spot information indicate the same and identical spot or not. In other words, the coordinate matching section 186 acquires spot information on two nodes N contained in the matching data MM and reads the coordinate information of the spot information. More specifically, it computationally determines the coordinate values of each node N such as the latitude and the longitude on the basis of the coordinate values and the offset quantities contained in the coordinate information and if the nodes N show the same and identical coordinate values, it reads the flag in the spot information of each of the nodes N and judges if the nodes N are identical with each other or not. If it judges that the two nodes N are identical with each other, it determines that two links L that are connected to the respective nodes N and have different pieces of link string block information intersect each other and the nodes N represent the same crossing. If, on the other hand, it judges that the two nodes N are not identical with each other it determines that the two links L that are connected to the respective nodes N and have different pieces of link string block information do not intersect each other and hence the nodes N represent a multi-level crossing.

The traffic jam condition recognizer 187 generates current traffic jam information relating to the traffic jam(s) that are currently present. More specifically, it appropriately acquires VICS data from the VICS as output from the VICS receiver 120. Then, it generates current traffic jam information relating to the traffic jam(s) that are currently present in an area containing the current position of the vehicle and the destination or in a predetermined area surrounding the current position of the vehicle.

Additionally, the traffic jam condition recognizer 187 determines the expected arrival time of the vehicle when the vehicle gets to the destination. For example, firstly it determines the expected arrival time of the vehicle when the vehicle gets to a selected position on the route to the destination. Then, it generates traffic jam prediction information relating to prediction of the traffic jam that may arise at the selected position before the vehicle gets to the destination or at a scheduled clock time selected and input in advance on the basis of the acquired expected arrival time, the expected arrival time that is selected and input in advance and the time series data 12i as well as other information.

More specifically, the traffic jam condition recognizer 187 recognizes the classification ID number of the date for which traffic jam(s) will be predicted on the basis of the clock time information obtained form the timer 191 and the related calendar template 20. Then, it retrieves and acquires the time series data 12i for the area that corresponds to the recognized classification ID number and contains the current position and the destination from the traffic jam prediction tables 10. Subsequently, it determines the expected arrival time of the vehicle when the vehicle gets to a selected position on the candidate traveling route to the destination as identified by traveling candidate route information generated by the route processor 188, which will be described in greater detail hereinafter, on the basis of the current traffic jam information and the current clock time acquired from the timer 191.

Techniques for determining the expected arrival time include the following. Firstly, the distance to a selected position on the traveling candidate route is recognized from the traveling candidate route information and the time required to travel the recognized distance is determined on the current traffic jam information. Subsequently, the expected arrival time is determined on the basis of the obtained required time and the current clock time. Then, traffic jam prediction information is generated on the basis of the time series data 12i and the expected arrival time.

The route processor 188 searches for the route by computationally determining the traveling route of the vehicle on the basis of the information on the selected items for defining the route as input by the vehicle user (driver) and the map information stored in the storage 160. The route processor 188 can computationally determine the traveling route by taking the current traffic jam information and the traffic jam prediction information as generated by taking the traffic jam condition recognizer 187 into consideration when the processor 180 recognizes a request for predicted traffic jam information requesting a route to be searched for by considering the current traffic jam information and the predicted traffic jam information.

More specifically, if the information on the selected items does not contain any request for predicted traffic jam information, the route processor 188 simply acquires the current position, the destination, the information on the selected items and the current traffic jam information. Then, it searches for roads on which the vehicle can travel, utilizing the maps for searching the traveling route of the vehicle on the basis of the acquired information, and generates traveling route information in which the route requiring the minimum traveling time, the route of the minimum traveling distance and routes that can avoid traffic jams and traffic control operations are specified. Then, it determines the time required to get to the destination for each of the routes contained in the traveling route information and generates required time information.

If, on the other hand, the information on the selected items contains a request for predicted traffic jam information, the route processor 188 acquires the current position, the destination, the information on the selected items and the current traffic jam information, taking the predicted traffic information into consideration. Then, it searches for roads on which the vehicle can travel and generates candidate traveling route information in which the route requiring the minimum traveling time, the route of the minimum traveling distance and routes that can avoid traffic jams and traffic control operations are specified. Then, it acquires the current traffic jam information and the traffic jam prediction information and generates traveling route information that specifies traveling routes by narrowing the candidate traveling routes contained in the candidate traveling route information to a fewer number of candidate traveling routes on the basis of the acquired information. Then, it determines the time required to get to the destination for each of the routes contained in the traveling route information and generates required time information on the required time for each of the routes.

When searching for the traveling routes, the matching data MM of the map information may be used along with the maps for searching the traveling route of the vehicle when, for example, the traveling route is searched for so as to utilize passages not contained in the maps for searching the traveling route of the vehicle such as back lanes and other lanes. The judgment of the coordinate matching section 186 on road conditions provides basis for searching for the traveling route when the matching data MM are used. The traveling route information also contains route guidance information for guiding and assisting the vehicle user (driver) driving the vehicle. The route guidance information may be appropriately displayed on the terminal display 140 and/or sounded from the voice output section 150 to assist the user driving the vehicle.

Additionally, the route processor 188 computationally determines the position of the vehicle at a predetermined time, 30 minutes from now for example, if the vehicle follows the current traveling route, taking the traffic jam prediction information into consideration and using the information and the maps from the sensor 110. More specifically, it computationally determines the traveling distance of the vehicle when a predetermined time has elapsed from now on the basis of the legal limit of speed contained in the map information and the current traffic jam information and other data and recognizes the position of the vehicle at the predetermined time on the basis of the computationally determined traveling distance, utilizing the matching data MM of the map information. The information on the predicted position is stored in the memory 170.

The information retriever 189 acquires the retrieval information stored in the storage 160, hierarchically retrieving the information on the basis of the specified items such as shops and facilities in response to a retrieval request for retrieval information as specified and input at the terminal input section 130.

The calendar modifying section 190 appropriately updates the calendar templates 20 stored in the memory 170 on the basis of the modifications specified and input by the user. More specifically, the calendar modifying section 190 recognizes various pieces of information specified and input by the user by way of the terminal input section 130. The specified pieces of information may include information on a specific date and information on an event, which may be a festival or sports matches. It recognizes the date specified by the information on the specific date and, at the same time, the classification ID number that corresponds to the information on the event. Techniques that can be used to recognize the classification ID number include the following. It may determine the date classification from the event information that is specified and input by the user and recognize the classification ID number from the determined date classification. If, for example, the event information relates to sports matches that take place in Athletic Ground B, it determines that the date classification to be "special day 2" and then recognizes the classification ID number to be "ID5" from the "special day 2". If the event information relates to the last day of five consecutive holidays, it recognizes the date classification to be "the last day of a long holiday" and the classification ID number to be "ID10" from the "last day of a long holiday". Then, it appropriately updates the calendar templates 20 on the basis of the date and the classification ID number it recognizes.

The timer 191 recognizes the current clock time typically GPS on the basis of the reference pulse of an internal clock. Then, the timer 191 appropriately outputs clock time information on the current clock time it recognizes.

### [Operation of the navigation device]

Now, the operation of the navigation device 100 will be described by referring to the drawings.

### (Calendar template modifying process)

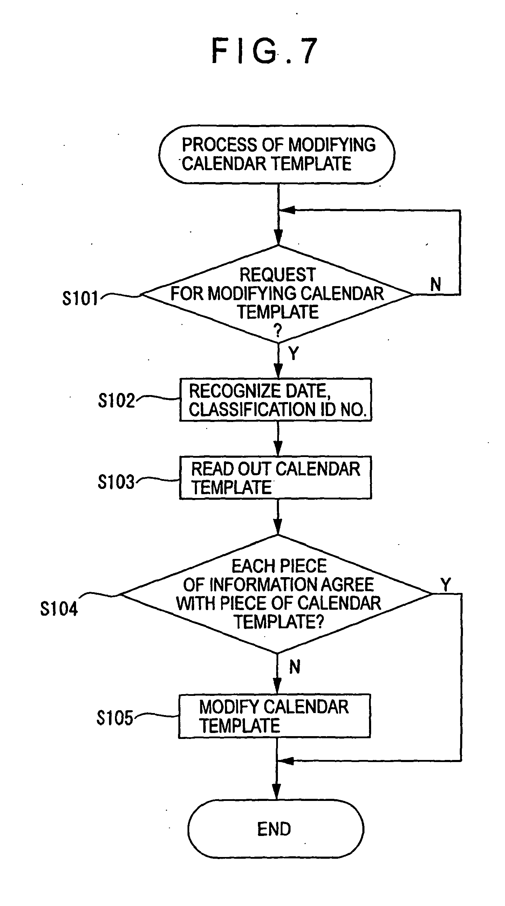

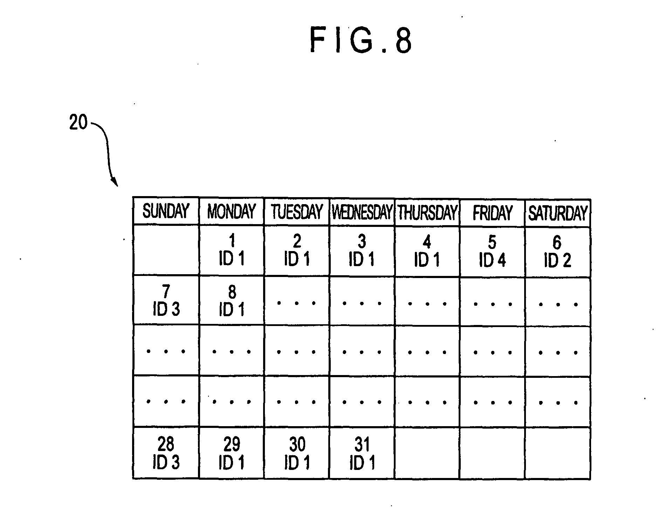

Firstly, the calendar template modifying process will be described by referring to FIGS. 7 and 8 as an operation of the navigation device 100. Assume here that the user modifies a calendar template 20 as shown in FIG. 5 on the basis of the information he or she recognized from radio and/or TV broadcastings, printed information sources such as newspapers and/or official publications and/or acquired by connecting his or her mobile phone to the mobile phone line, telling that a festival will be held on 5th in City A. FIG. 7 is a flow chart of the operation of modifying a calendar template and FIG. 8 is a schematic conceptual illustration of the table structure of data in a calendar template as updated by the calendar modifying section.

Firstly, the user (driver) of the vehicle turns on the power source of the navigation device 100 to feed power to the device. As power is supplied to the device, the processor 180 controls the terminal display 140 and causes it to display a main menu and prompt the user to specify and input a specific operation of the navigation device 100.

Then, as shown in FIG. 7, the user (driver) operates the terminal input section 130 to specify an operation of modifying the calendar template 20. As the processor 180 recognizes by way of the calendar modifying section 190 the input specifying an operation of modifying the calendar template 20 (Step 101), it has the terminal display 140 display an image that prompt the user to specify and input a date and an event necessary for modifying the calendar template 20.

Thereafter, as the user specifies and inputs a date and an event by operating the terminal input section 130, following the instructions in the displayed image, the calendar modifying section 190 acquires the date and the event specified and input by the user. The user may specify and input a date and an event by entering characters or selecting them from a number of candidates being displayed on the terminal display 140. Alternatively, the user may specify and input a date and an event in a manner as described below. Firstly, the user selects a date by operating the terminal input section 130 and moving the flashing cursor being displayed in or around the area of a date in the calendar template 20 as shown in FIG. 5. Then, he or she inputs the event of the selected date by entering characters or by selecting one of the events being displayed on the terminal display 140.

As the calendar modifying section 190 acquires the date and the event, it operates to recognize the obtained information (Step S102). More specifically, it recognizes the specified date and the classification ID number that corresponds to the event. In the above described instance, the calendar modifying section 190 recognizes that the date is 5th and determines that the date classification that corresponds to the event is "special day 1". Subsequently, it recognizes the classification ID number as "ID4" from the date classification as determined by it.

Thereafter, it reads out the calendar template 20 stored in the memory 170 (Step S 103). Then, the calendar modifying section 190 determines if the pieces of information it recognizes in the Step S102 agree with the pieces of information contained in the calendar template 20 that is read out in the Step S103 or not (Step S104). More specifically, it recognizes the classification ID number that corresponds to the date it recognizes in the Step S102 from the read out calendar template 20. Then, it determines if the classification ID number recognized form the calendar template 20 and the classification ID number recognized in the Step S102 agree with each other or not.

If the calendar modifying section 190 determines in the Step S104 that the two classification ID numbers agree with each other, it does not modify the calendar template 20 and terminates the processing operation. If, on the other hand, it determines that the two classification ID numbers do not agree with each other, it modifies the calendar template 20 on the basis of the various pieces of information it recognizes in the Step S102 (Step S105) and terminates the processing operation. More specifically, since the classification ID number of the 5th as recognized in the Step S102 is "ID4" and the classification ID number of the 5th as recognized from the calendar template 20 is "ID1", the calendar modifying section 190 modifies the classification ID number of the 5th from "ID1" to "ID4" as shown in FIG. 8, and terminates the processing operation.

### (Process of searching for the traveling route)

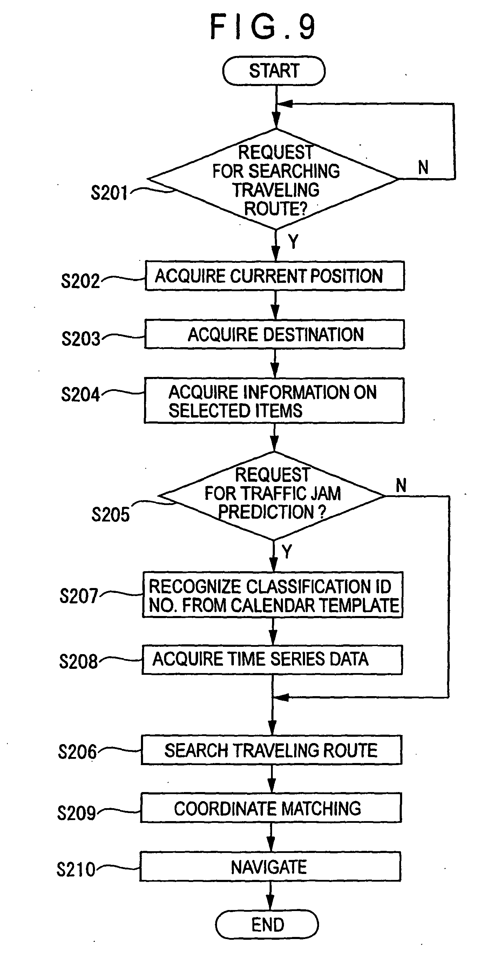

Now, the process of searching for the traveling route of the navigation device 100 will be described by referring to FIG. 9 and FIGS. 10A through 10C. FIG. 9 is a flow chart of the operation of searching for a traveling route of the navigation device. FIGS. 10A through 10C are schematic illustrations of displayed images of a traveling route. FIG. 10A is a schematic illustration of a displayed image when the embodiment searches for a traveling route to a selected position. FIG. 10B is a schematic illustration of a displayed image when the embodiment re-searches for a traveling route to the position when a predetermined time period has elapsed from FIG. 10A. FIG. 10C is a schematic illustration of a displayed image when the embodiment re-searches for a traveling route to the position when a predetermined time period has elapsed from FIG. 10B.

Firstly, the user operates the terminal input section 130 to input a command for searching the traveling route of the vehicle as shown in FIG. 9. As the processor 180 recognizes the input of the command for searching the traveling route of the vehicle (Step S201), the processor 180 causes the terminal display 140 to display an image prompting the user to enter various pieces of information necessary for searching the traveling route such as the destination, the shortest traveling distance, the shortest traveling time and the necessary of predicting traffic jams.

Then, as the processor 180 recognizes the various pieces of information necessary for searching the traveling route, it has the current position recognizer 181 recognize the current position of the vehicle (Step S202) and the destination recognizer 182 recognize the specified and input destination (Step S203). More specifically, the processor 180 acquires information on the current position of the vehicle by computationally determining the current position of the vehicle on the basis of the speed data and the azimuth data output respectively from the speed sensor and the azimuth sensor of the sensor 110 and the GPS data on the current position output from the GPS receiver by way of the current position recognizer 181. The acquired information on the current position is appropriately stored in the memory 170.

The processor 180 also controls the terminal display 140 to have it display an image that prompts the user to select and input the destination by operating the terminal input section 130. As the user inputs the destination in response to the prompt of the image, operating the terminal input section 130, the destination recognizer 182 acquires the information on the destination as input by the user. The acquired information on the destination is stored appropriately in the memory 170.

When the user requests to acquire information on the spot of the destination when inputting the destination by operating the terminal input section 130, he or she operates the terminal input section 130 so as to request retrieval information on the spot, seeing the image being displayed on the terminal display 140. In response to the request for retrieval information on the spot, by the information retriever 189, the processor 180 hierarchically retrieves the mesh information of the lower layers for each area, typically using map information MP and acquires the retrieval information correlated to the spot of the destination from the storage 160. Then, the processor 180 controls the terminal display 140 to have it display the acquired retrieval information.

If the retrieval information requires to display a map of a predetermined area containing the destination or the user who recognizes the retrieval information operates the terminal input section 130 to display a predetermined area, the processor 180 appropriately controls the terminal display 140 so as to have it display the display mesh information VMx of the corresponding area. As the desired map is displayed on the terminal display 140 in this way, the user identifies the destination by appropriately selecting and inputting the spot of the destination by means of the terminal input section 130, for example, by operating the cursor being displayed on the map image. As the spot is identified, the destination recognizer 182 of the processor 180 recognizes the spot of the destination and appropriately stores it in the memory 170.

Additionally, the processor 180 controls the terminal display 140 so as to have it display an image that prompt the user to select items that are requirements to be met when searching for the traveling route and input the selected items. As the user operates the terminal input section 130 to select and input the items in response to the prompt of the image being displayed, the processor 180 acquires information on the selected and input items (Step S204). The acquired information on the selected items is appropriately stored in the memory 170.

Thereafter, the processor 180 acquires the information on the selected items stored in the memory 170 by the route processor 188 and determines if the information on the selected items it acquires contains a request for prediction of traffic jams or not (Step S205).

If the processor 180 determines in the Step S205 by means of the route processor 188 that no request for prediction of traffic jams is contained, it acquires the VICS data output from the VICS receiver 120 by means of the traffic jam condition recognizer 187. Then, the processor 180 generates current traffic jam information of an area containing the current position and the destination from the obtained VICS data. The generated current traffic jam information is appropriately stored in the memory 170.

Then, the processor 180 has the route processor 188 acquire the current position, the destination, the selected items and the current traffic jam information from the memory 170. Then, it performs a route searching processing operation of searching for the traveling route of the vehicle from the current position to the destination, using the maps for searching the traveling route of the vehicle and the matching data MM stored in the storage 160 (Step S206).

More specifically, when the moving route involves only major roads for which sufficient data are accumulated in an organized manner, the processor 180 searches the moving route, simply using the maps for searching the traveling route of the vehicle. When, on the other hand, the moving route involves minor and narrow roads for which sufficient data are not accumulated, it searches the moving route, using the matching data MM for the minor road or each of the minor roads, until the minor road gets to a major road. When searching for the moving route, using the matching data MM, the processor 180 recognizes the condition of each of the roads on the basis of the related link L, determining if there are two nodes N that represent the same and identical spot or not by means of the coordinate matching section 186.

Then, the route processor 188 detects a plurality of candidate traveling routes and narrows them down to a fewer number of candidate traveling routes to generate traveling route information on, for example, five candidate traveling routes that meet the requirements provided by the user on the basis of the acquired information of the selected items and the current traffic jam information. The route processor 188 additionally determines the traveling time necessary for each of the candidate traveling routes of the moving route information to get to the destination and generates traveling time information. Then, the display controller 184 has the terminal display 140 display the computationally obtained five candidate traveling routes and prompt the user to select one of them. The traveling route of the vehicle is defined as the user selects one of the candidate traveling routes.

If, on the other hand, the processor 180 determines in the Step S205 by means of the route processor 188 that a request for prediction of traffic jams is contained, it acquires the clock time from the timer 191 and recognizes the current date from the acquired clock time. Then, it acquires the related calendar template 20 from the memory 170 and recognizes the classification ID number of the date it recognizes from the acquired calendar template 20 (Step S207). It also acquires information on the current position and the destination stored in the memory 170 and recognizes the current position and the destination. Then, the traffic jam condition recognizer 187 acquires the time series data 12i that corresponds to the recognized classification ID number and contains the current position and the destination from the traffic jam prediction table 10 stored in the storage 160 (Step S208).

Thereafter, the processor 180 performs the processing operation of the Step S206. More specifically, the processor 180 generates current traffic jam information by means of the traffic jam condition recognizer 187 and stores it in the memory 170. Then, the processor 180 acquires information on the current position, the destination and the selected items from the memory 170 by means of the route processor 188. Then, it detects a plurality of candidate traveling routes on the basis of the acquired information and narrows them down to a fewer number of candidate traveling routes on the basis of the acquired information on the selected items to generate information on the candidate traveling routes that meet the requirements of the user.

Subsequently, the processor 180 acquires the current traffic jam information from the memory 170 by means of the traffic jam condition recognizer 187 and the current time and day from the timer 191. Then, it determines the expected arrival time of getting to a selected position on each of the candidate traveling routes contained in the information on the candidate traveling routes generated by the route processor 188 on the basis of the current traffic jam information and the current time and day it acquires. Then, the traffic jam condition recognizer 187 predicts the traffic jam on each of the candidate traveling routes at the expected arrival time of getting to the selected position on the basis of the time series data 12i acquired in the Step S208 and generates traffic jam prediction information on the condition of each of the predicted traffic jams.

Then, the processor 180 narrows down the candidate traveling routes in the candidate traveling route information to a fewer number of candidate traveling routes by means of the route processor 188 on the basis of the current traffic jam information and the traffic jam prediction information to generate traveling route information on a number of candidate traveling routes, five candidate traveling routes for instance, that meet the requirements of the user. Additionally, the route processor 188 determines the traveling time necessary for getting to the destination by each of the candidate traveling routes in the traveling route information to generate traveling time information. Then, the processor 180 operates the display controller 184 so as to have the terminal display 140 display the information on the computationally determined five candidate traveling routes and an image prompting the user to select one of the candidate traveling routes. The traveling route is defined when the user selects one of the candidate traveling routes.

Thereafter, the processor 180 acquires matching data MM from the storage 160. Then, it has the coordinate matching section 186 perform a coordinate matching processing operation on the acquired matching data MM (Step S209) and recognizes the condition of the roads of the selected traveling route or how the roads are connected. Then, it appropriately stores the condition of the roads in the memory 170. Additionally, the processor 180 controls the terminal display 140 by means of the display controller 184 so as to have it superimpose an icon that indicates the current position of the vehicle on the acquired map on the basis of the information on the current position and also the traveling route selected by the user, the traffic jam prediction information, the expected traveling time and the current traffic jam information, while it has the voice output section 150 appropriately output a voice for guiding the user (Step S210).

Assume here that the processing operations of the Steps S201 through S210 are performed and no traffic jam takes place currently on the roads that connect the current position S1 and the destination G with the shortest distance, while no traffic jam is predicted at any position on the traveling route for getting to the destination G. In such a situation, the traveling route K1 is superimposed on the roads R11, R12 and R13 that connect the current position S1 and the destination G with the shortest distance on the basis of the traveling route information and the traveling time marks Nt are superimposed on the map at respective positions near the current position S1 and near the destination G on the basis of the traveling time information as shown in a navigation image 30A of FIG. 10A. It will be appreciated that an image as shown in FIG. 10A is displayed when the processing operations of the Steps S201 through S206 and S209 are performed and no traffic jam is currently taking place on the roads that connect the current position S 1 and the destination G with the shortest distance. The traveling time marks Nt as shown in FIG. 10A indicate that the traveling time to the destination G is one hour and thirty minutes.

Subsequently, the processor 180 recognizes the running condition of the vehicle on the basis of the data output from the speed sensor, the azimuth sensor and the acceleration sensor of the sensor 110 and the GPS data output from the GPS receiver. Additionally, the processor 180 notifies the user of guidance information for guiding the travel of the vehicle that is generated on the basis of the outcome of the processing operation of the Step S210, which is the recognized moving condition of the vehicle, and the route guidance information contained in the traveling route information (Step S210). The guidance information is provided to the user by way of the terminal display and/or in voice.

More specifically, the display controller 184 of the processor 180 connects the nodes N in the matching mesh information MMx acquired from the storage 160 by means of a poly-line and performs a poly-line processing operation on the basis of the structure of each of the roads as described in the link string block information of the matching data MM so as to have the terminal display 140 display the roads in the area of the matching mesh information MMx that contains the traveling route. Additionally, the display controller 184 has the terminal display 140 superimpose the designations of the name information VMxA and the background information VMxC of the map other than the roads in the area that corresponds to the matching mesh information MMx of the display mesh information VMx acquired from the storage 160. Then, the current position of the vehicle is superimposed on the displayed map.

When superimposing the current position on the map, a map matching processing operation is performed on the basis of the matching data MM so that the current position of the vehicle as indicated by a mark that is superimposed on the map being displayed may not be shifted from the road in the map on the terminal display 140. In other words, the processor 180 appropriately corrects the current position information in such a way that the current position of the vehicle as displayed on the terminal display 140 is found on the matching data MM of the traveling route and hence on the link string of links L. Thus, the processor 180 superimposes the current position of the vehicle on the map to guide the user. When the current position gets to the predetermined position, it provides guidance in the above-described manner by displaying it or in voice. While a coordinate matching processing operation is performed at the time of acquiring the matching data MM in the Step S209 in the above description, the coordinate matching processing operation may alternatively be performed at the time of or before performing the map matching processing operation.

When the terminal input section 130 is operated to display a map of an area other than the above area for viewing, the map will be displayed by way of a retrieval operation as described above along with the display mesh information VMx acquired from the storage 160.

While the vehicle is moving, the processor 180 acquires VICS data on traffic jams, traffic accidents, road construction works, traffic control operations and meteorological information by way of the traffic jam condition recognizer 187. Then, if the moving condition of the vehicle can be influenced and it can be forced to alter the traveling route according to the VICS data and the meteorological information acquired by way of the traffic jam condition recognizer 187, the processor 180 repeats the processing operation of searching for the traveling route. Additionally, the processor 180 notifies the user of the influence or provides the user with guidance that reflects the influence by the guidance providing section 183.

Assume here now that the traffic jam condition recognizer 187 recognizes that a traffic jam is taking place on the road R12 as a result of the processing operations of the Step S201 through S209 but no traffic jam is taking place at the selected position on the way to get to the destination G. Then, in such a situation, the traveling route K2 is superimposed on the roads R11, R14 and R15 on the basis of the traveling route information and the traveling time marks Nt are superimposed on the map at respective positions near the current position S2 and near the destination G on the basis of the traveling time information, while the current traffic jam mark Jg is superimposed on the map at a position near the road R12 on the basis of the current traffic jam information as shown in a navigation image 30B of FIG. 10B. An hour, or "1:00", is displayed for the traveling time from the current position S2 to the destination G. It will be appreciated that an image as shown in FIG. 10B is displayed when the processing operations of the Steps S201 through S206 and S209 are performed and a traffic jam is currently taking place on the roads R12.

Assume now that subsequently the processing operations of the Steps S201 through S209 are performed and the traffic jam condition recognizer 187 recognizes that the traffic jam on the road R12 is not dissolved yet, while it is predicted that a traffic jam will occur on the road R13 before the vehicle gets to the destination G. In such a situation, the traveling route K3 is superimposed on the roads R14, R16, R17 and R18 on the basis of the traveling route information and the traffic jam prediction mark Jy is superimposed near the road R13 on the basis of the traffic jam prediction information, while the traveling time marks Nt are superimposed on the map at respective positions near the current position S3 and near the destination G on the basis of the traveling time information, while the current traffic jam mark Jg is superimposed on the map at a position near the road R12 on the basis of the current traffic jam information as shown in a navigation image 30C of FIG. 10C. Forty minutes, or "0:40", is displayed for the traveling time from the current position S3 to the destination G.

### (Transition of traffic jam displaying process)

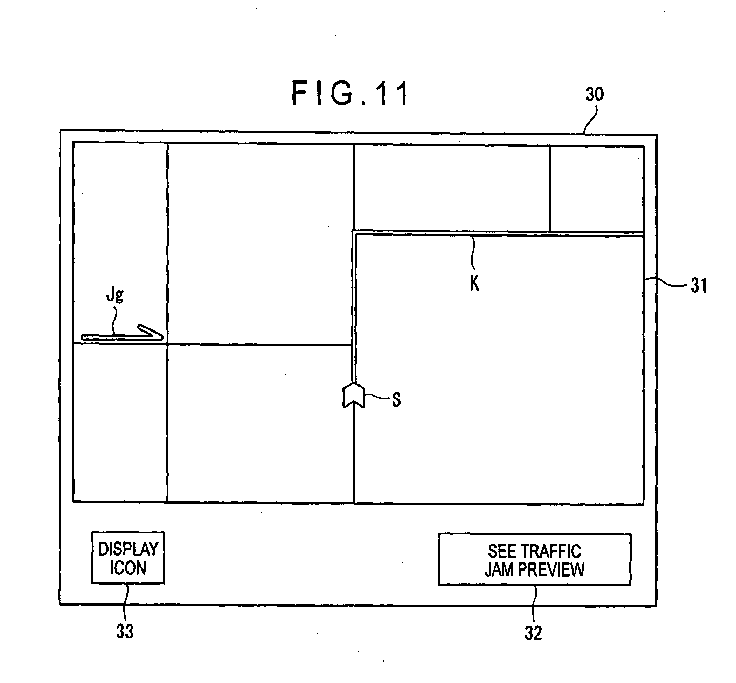

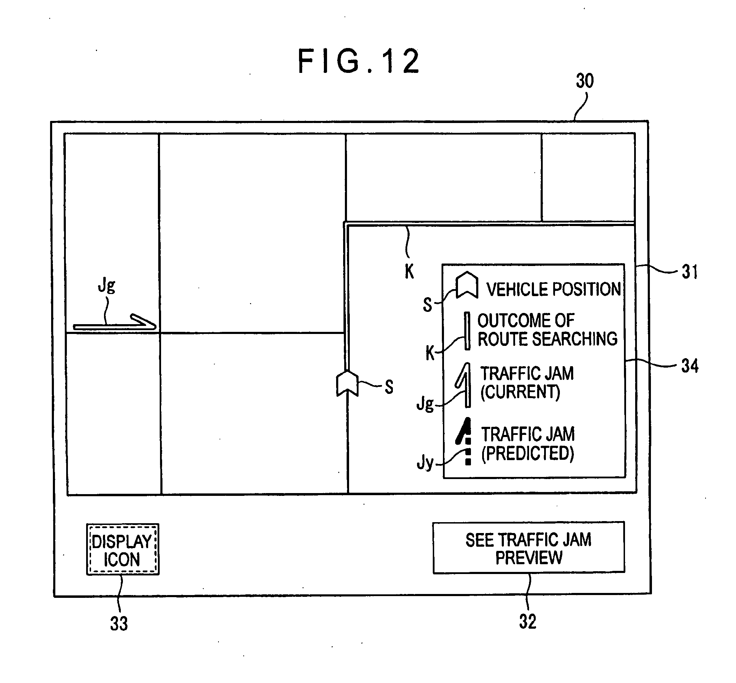

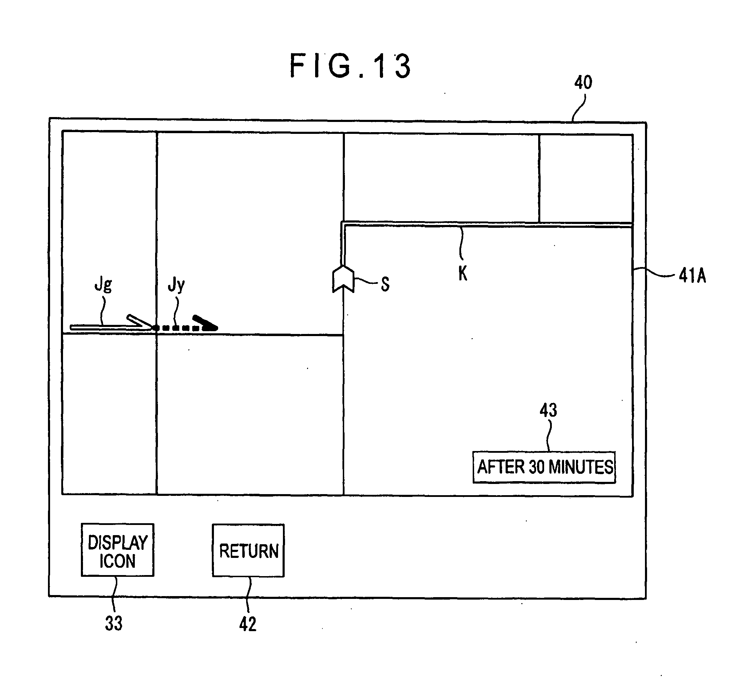

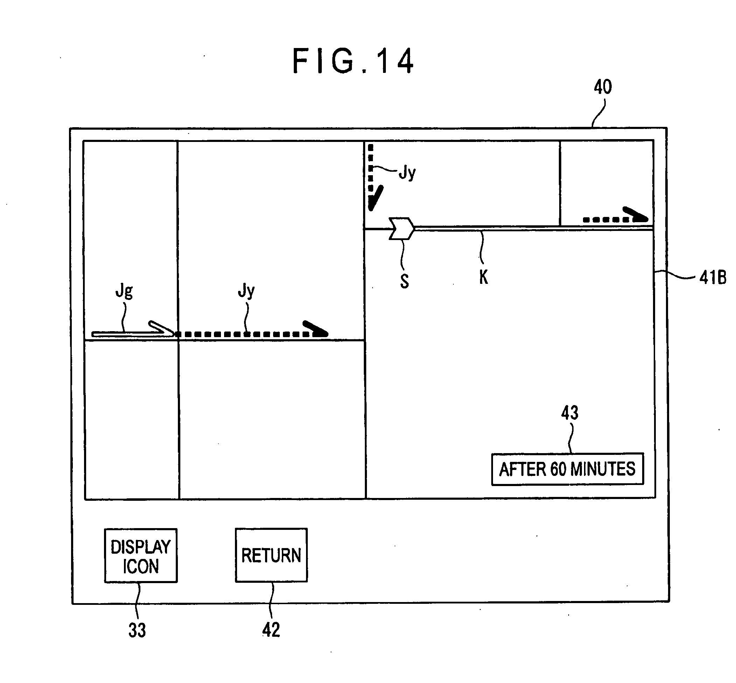

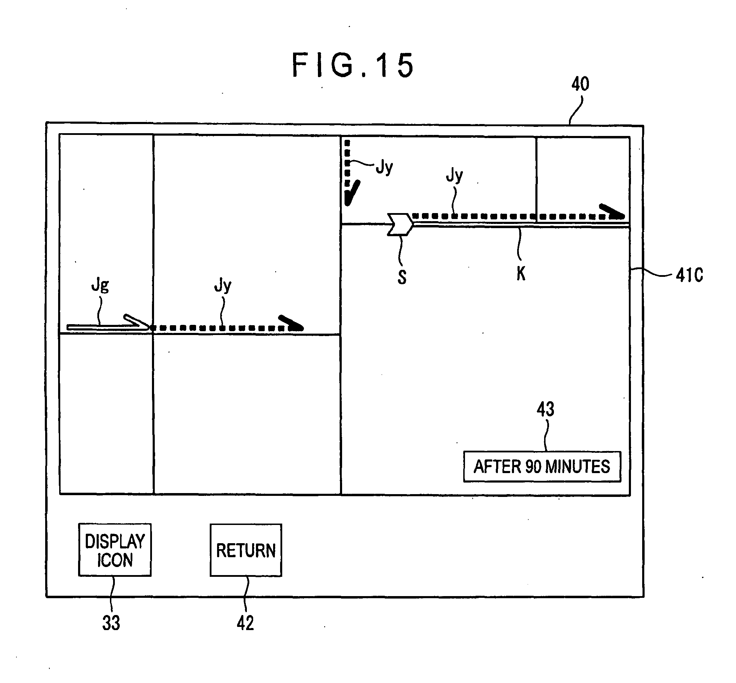

Now, the transition of traffic jam displaying process will be described by referring to FIGS. 11 through 15 as an operation of the navigation device 100. FIG. 11 is a schematic conceptual illustration of a navigation image displayed on the terminal display. FIG. 12 is a schematic conceptual illustration of a navigation image where an icon legend window is displayed. FIG. 13 is a schematic conceptual illustration of a navigation preview image displayed on the terminal display after an elapse of 30 minutes. FIG. 14 is a schematic conceptual illustration of a navigation preview image displayed on the terminal display after an elapse of 60 minutes. FIG. 15 is a schematic conceptual illustration of a navigation preview image displayed on the terminal display after an elapse of 90 minutes.

Firstly, as the user recognizes the displayed image of the map where the traveling route of the vehicle is superimposed as shown in FIG. 10B, he or she may operate the terminal input section 130 to generate a transition information request, requesting the terminal display 140 to display the transition of the traffic jam in order to recognize if the traffic jam is increasing or decreasing. More specifically, the user may operate the command button 32 for having the terminal display 140 display the transition of the traffic jam on the map displayed on the display screen as shown in FIG. 11 by operating the appropriate one of the operation buttons or the operation knobs of the terminal input section 130 or the touch panel of the terminal display 140.

FIG. 11 is a schematic illustration of a navigation image 30 that includes a map display area 31 for displaying a map. The navigation image 30 also includes a command button 32 to be operated by the user in order to have the terminal display 140 display the transition of the ongoing traffic jam. The navigation image 30 additionally includes a command button 33 to be operated by the user in order to have the terminal display 140 displays the legend of the various icons that are superimposed on the map displayed in the map display area 31. As the command button 33 is operated, icon S that indicates the current position of the vehicle, icon K that indicates the traveling route obtained as a result of a traveling route searching operation, icon Jg that indicates the traffic jam that is currently taking place, icon Jy that indicates the predicted traffic jam as predicted as a result of a traffic jam predicting operation are displayed in the icon legend window 34 in the navigation image 30, i.e., in the map display area 31 with the legend of the icons. The icon legend window 34 appears as if it pops from the map display area 31. The icon legend window 34 is displayed for several seconds and then automatically closed. It may alternatively be so arranged that the icon legend window 34 is closed when the command button 33 is operated for the second time.

As the command button 32 in the navigation image 30 is operated, a navigation preview image 40 as shown in any of FIGS. 13 through 15 is displayed. The navigation preview image 40 includes a map display area 41A (41B, 41C), a command button 33 to be operated in order to have the terminal display 140 display an icon legend window 34 and a command button 42 to be operated in order to have the terminal display 140 close the navigation preview image 40 and display the original navigation image 30. Then, an elapsed time 43 from the current clock time as computed by the traffic jam condition recognizer 187 is superimposed on the map in the map display area 41A (41B, 41C) of the navigation preview image 40 by the display controller 184. Note that FIG. 13 shows the predicted traffic jam when 30 minutes have elapsed from the current clock time of FIGS. 11 and 12, and FIG. 14 shows the predicted traffic jam when 60 minutes have elapsed form the current clock time, whereas FIG. 15 shows the predicted traffic jam when 90 minutes have elapsed from the current clock time.

Then, as the traffic jam condition recognizer 187 recognizes the request for transition information generated in response to an input operation using the command button 32, it generates traffic jam prediction information for every 30 minutes, for instance, after the current clock time on the basis of the current clock time it acquires from the timer 191 and the time series data 12i it acquires on the basis of the calendar template 20. Additionally, the route processor 188 generates information on the predicted position of the vehicle, which is information on the transitional position of the vehicle after the elapse of 30 minutes from now, by computing the predicted position of the vehicle on the assumption that the vehicle travels along the traveling route selected in the above described processing, taking the traffic jam prediction information into consideration. Then, the generated traffic jam prediction information and the predicted position information are stored in the memory 170.

Then, the display controller 184 generates a traffic jam prediction mark Jy that is the icon, or image data, that correspond to the traffic jam prediction information after the elapse of every 30 minutes from now as stored in the memory 170 and superimposes it on the map displayed in the map display area 31 at the position corresponding to the predicted respective positions of the vehicle after the elapse of every 30 minutes. At the same time, the display controller 184 also superimposes the icon S that represents the position of the vehicle as determined from the information on the predicted position of the vehicle after the elapse of every 30 minutes on the map at the corresponding position. Then, the display controller 184 causes the terminal display 140 to display the navigation preview image 40 in the map display area 41 with the icons superimposed on it. The position of the traffic jam prediction mark Jy and that of the icon S are updated, for example, every 0.5 seconds or 1 second according to the traffic jam prediction information and the information on the predicted position of the vehicle after the elapse of every 30 minutes.

If the user recognizes the transition of the traffic jam condition from the displayed navigation preview image 40 and the traffic jams on the traveling route that is already defined will be expected to dissolve soon, the user may input a request for researching for the traveling route, or rerouting, by operating the terminal input section 130. As the route processor 188 recognizes the input of the rerouting request, it performs the processing operation of FIG. 9 for another time. A rerouting operation may also be conducted when the traveling route is computationally defined not on the basis of the predicted traffic jams but only on the current traffic jam condition and when a traffic jam is expected to arise on the traveling route and become aggravated with time as a result of recognizing the transition of the traffic jam condition.

In short, the route processor 188 computationally generates traveling route information on several, five for instance, candidate traveling routes and has the display controller 184 display the generated traveling route information on the computationally determined five candidate traveling routes on the terminal display 140 and prompts the user to select one of the candidate traveling routes. As the user selects one of the candidate traveling routes by way of an input operation on the basis of the transition of the traffic jam condition, the selected traveling route is superimposed on the map of the terminal display 140 along with current traffic jam information, traffic jam prediction information, traveling time information and the icon representing the current position of the vehicle as determined on the basis of the information on the current position of the vehicle for the purpose of navigation.

Thus, it is possible to select a new traveling route that reliably accommodates the transition of the traffic jam condition by a rerouting operation that is conducted after recognizing the transition of the traffic jam condition on the basis of the traffic jam condition after the elapse of a predetermined time from the current clock time. It may be so arranged that the computationally determined other candidate traveling routes are displayed again and a new traveling route is selected from them and displayed for the purpose of navigation.

### [Advantages of the 1st Embodiment]

As described above in detail, as the processor 180 of the first embodiment acquires VICS data that provide traffic information including map information and information on the traffic condition of the vehicle including the traffic jam condition and recognizes a request for displaying the transition of the traffic condition or the transition of traffic jams, it causes the display controller 184 to display a map where an image representing the traffic jam prediction information after the elapse of a predetermined time, e.g., every 30 minutes, is superimposed on the terminal display 140 at regular intervals of a predetermined time period. With this arrangement, a user can easily recognize the predicted traffic jams in the future as well as the expected transition of the predicted traffic jams. With conventional techniques for simply displaying predicted traffic jams, when the traveling route is changed by detecting a new traveling route in order to avoid a predicted traffic jam, the vehicle may consequently make a detour if the current traffic jam on the road ahead is dissolved before the vehicle gets there. To the contrary, with the present embodiment, it is no longer necessary to make such a detour because it recognizes the transition of the traffic jam and the user can select a traveling route of the shortest traveling distance for easy and effective traveling to a great convenience on the part of the vehicle user.

Additionally, the traffic jam prediction mark Jy representing the traffic jam prediction information for a predetermined time, e.g., 30 minutes, after the current clock time is superimposed on the map being displayed on the terminal display 140 and updated with time intervals, every 0.5 seconds or 1 second for example. With this arrangement, the user can easily recognize the transition of the traffic jam condition because the map being displayed may appear as if it is animated so that the user can easily and properly select an appropriate traveling route for easy and effective traveling. Additionally, since the traffic jam prediction mark Jy is superimposed on the map being displayed and updated with time intervals in an orderly manner, the map remains unchanged on the display to reduce the load of the operation of updating the traffic jam prediction mark and the transition of the traffic jam can be displayed instantaneously.

Still additionally, when the transition of the traffic jam is displayed while the route processor 188 is selecting the traveling route, the predicted position of the vehicle after the elapse of a predetermined time is computed on the basis of the map information and the icon representing the position of the vehicle is superimposed to show the position of the vehicle after the elapse of the predetermined time and updated with time intervals. With this arrangement, relationship between the transition of the traffic jam and the moving vehicle can be recognized with ease so that the user can be comfortably navigated.

Furthermore, this embodiment is adapted to notify the user of the traffic condition, the traffic jam condition in particular. Thus, it can notify the user of the information that the user requires and hence can be comfortably navigated.

Additionally, traffic jam prediction information is generated by use of a traffic jam predetermined table 10 that contains statistic traffic information obtained by statistically processing past traffic conditions. Therefore, the load of the processing operation is small if compared with an arrangement where traffic jams are predicted by use of a specifically designed simulation computer program so that predicted traffic jams can be computationally determined quickly for a clock time after the elapse of a predetermined time from the current clock time. In other words, the user can be quickly notified of the transition of the traffic jam on the traveling route ahead on the basis of the predicted traffic jams and hence can be comfortably navigated.

Additionally, calendar templates 20 are provided and the traffic jam prediction table 10 is correlated with the dates of each of the calendar templates 20. More specifically, the calendar templates 20 are made to show a table structure where each calendar date is correlated with a classification ID number that corresponds to a date classification ID 11 of the traffic jam prediction table 10 and is modifiable. With this arrangement, traffic jams can be reliably predicted by using the traffic jam prediction table 10 that is formed by using past data so that the user can be comfortably navigated. Additionally, as pointed out above, each calendar date of the calendar templates 20 is correlated with a classification ID number that corresponds to the traffic jam prediction table 10 and is modifiable. Therefore, if the predicted traffic condition and the current traffic condition show discrepancies, it is only necessary to change the classification ID number that corresponds to the time series data of the traffic jam prediction table to correspond to the current situation so that it is possible to predict traffic jams reliably.

### [2nd Embodiment]

Now, the second embodiment of the present invention will be described by referring to the accompanying drawings. This embodiment of traffic condition notifying system is a telecommunication type navigation system for navigating a driver of a moving body, or a vehicle, in response to the moving condition thereof. However, it should be noted that a traffic condition notifying system according to the present invention is not necessarily arranged in a vehicle. Like the first embodiment, it can be arranged in any moving body in order to notify the driver of the moving body of the traffic condition thereof.

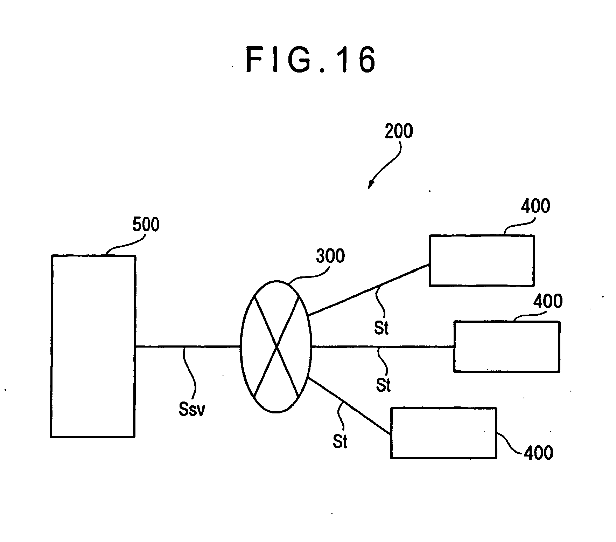

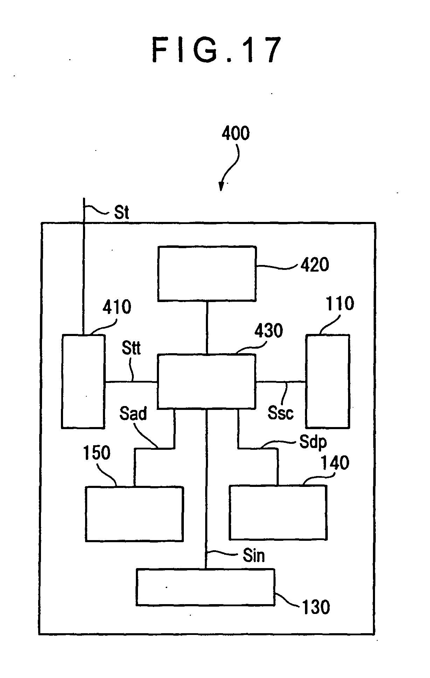

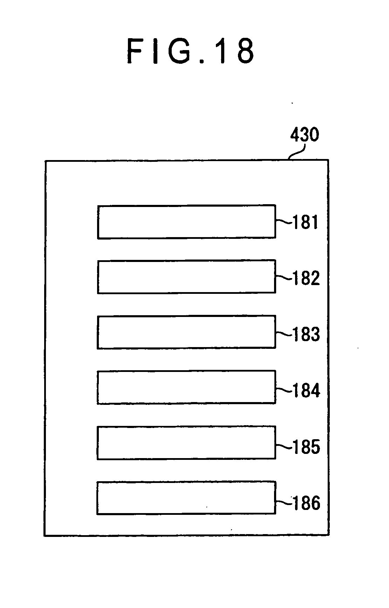

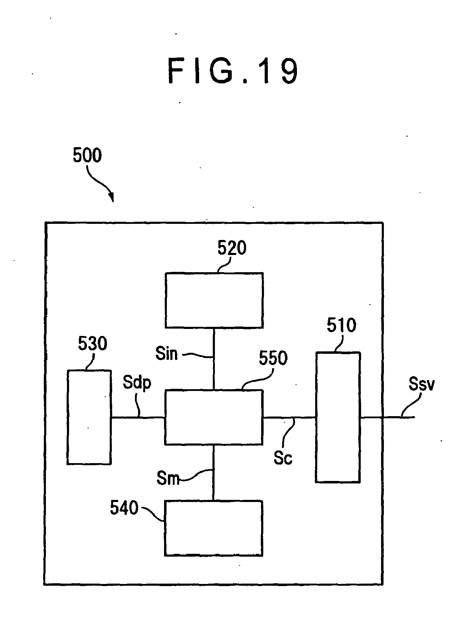

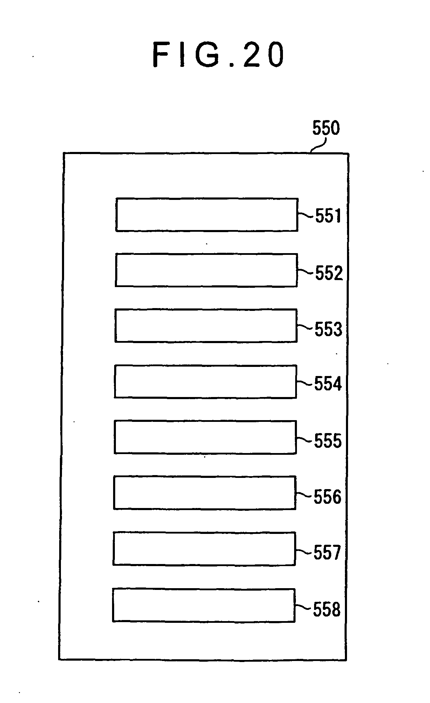

FIG. 16 is a schematic block diagram of the second embodiment of a vehicle navigation system, showing the configuration thereof. FIG. 17 is a schematic block diagram of a terminal unit. FIG. 18 is a schematic block diagram of a processor of the terminal unit. FIG. 19 is a schematic block diagram of a server unit. FIG. 20 is a schematic block diagram of the CPU of the server unit. In the drawings, the components same as those of the first embodiment are denoted respectively by the same reference symbols and will not be described any further.

### [Configuration of navigation device]

In FIG. 16, reference symbol 200 denotes a telecommunication type navigation system that is a traffic condition notifying device. The navigation system 200 is adapted to navigate a user of a vehicle, or a moving body in response to the moving condition of the vehicle. However, for the purpose of the present invention, a moving body is not limited to a vehicle and may alternatively be an aircraft or a ship. The navigation system 200 includes a network 300, terminal units 400 that operate as traffic condition notifying devices and a server unit 500.

The network 300 is connected to the terminal units 400 and the server unit 500. The network 300 is adapted to connect the terminal units 400 and the server unit 500 so that they can exchange information with each other. Examples of networks that can be used for the network 300 include the Internet adapted to operate on the basis of a general purpose protocol such as TCP/IP, intranets, LANs (local area networks), networks formed by a plurality of base stations that can exchange information via wireless mediums such as telecommunication networks and broadcasting networks and wireless mediums themselves that can be used for the terminal units 400 and the server unit 500 to directly exchange information. For the purpose of the present invention, wireless mediums include electric waves, light, sound waves and electromagnetic waves.

Like the navigation device 100 of the first embodiment, each of the terminal units 400 may be realized in the form of a vehicle-mounted type device to be mounted in a vehicle, a portable type device, a PDA (personal digital assistant), a portable phone, a PHS (personal handyphone system), a personal computer or the like. Each of the terminal units 400 acquires map information delivered from the server unit 500 via the network 300 and searches for information on the current position and the destination of the vehicle on the basis of the maps it has. It also searches for and displays the route to the destination as well as a predetermined store that is located in the vicinity of the current position of the vehicle and operates as landmark, including the services the store provides. As shown in FIG. 17, each of the terminal units 400 has a transceiver 410, a sensor 110, a terminal input section 130, a terminal display 140, a voice output section 150, a memory 420, a processor 430 and so on.

The transceiver 410 is connected to the server unit 500 via the network 300 and also to the processor 430. The transceiver 410 is adapted to receive terminal signal St from the server unit 500 via the network 300 and, upon receiving the terminal signal St, it performs an input interface processing operation that is predefined to acquire a terminal signal St and outputs a processed terminal signal Stt to the processor 430. The transceiver 410 is also adapted to receive a processed terminal signal Stt from the processor 430 and, upon receiving the processed terminal signal Stt, it performs an output interface processing operation that is predefined to transmit it to the server unit 500 via the network 300 as terminal signal St.

The sensor 110 detects the moving condition of the vehicle on which it is mounted, including the current position and the running condition of the vehicle, and outputs signal Ssc of a predetermined format that represents the moving condition to the processor 430.

The terminal input section 130 typically includes various operation buttons and operation knobs (not shown) to be used for input operations of the vehicle user. The operation buttons and the operation knobs are used to specify operations of the terminal unit 400. More specifically, they may be used to execute instructions for telecommunication, requesting to acquire information via the network 300, to specify the type of information to be acquired and/or the requirements to be met when acquiring information, to specify the destination, to retrieve information and to cause the running condition, or the moving condition of the moving body, to be displayed. In response to an operation of the vehicle user, the terminal input section 130 outputs a predetermined signal Sin to the processor 430.

The terminal display 140 is controlled by the processor 430 and adapted to display images for signal Sdp from the processor 430. Images that are displayed on the terminal display 140 include maps and images of retrieval information transmitted from the server unit 500.

The voice output section 150 is controlled by the processor 430 and outputs voices for the purpose of notification for various signals Sad from the processor 430 including those for voice data.

The memory 420 appropriately stores various information acquired via the network 300, information on specified items that are input at the terminal input section 130, music data and image data. The memory 420 also stores various application programs to be developed on the OS (operating system) of the terminal unit 400 that controls the operation of the entire terminal unit 400. The memory 420 may alternatively include a drive or a driver for readably storing data on a recording medium such as HD (hard disc) or optical disk.

The processor 430 has various input/output ports (not shown) including a telecommunication port to connected to the transceiver 410, a GPS reception port connected to a GPS receiver of the sensor 110, sensor ports connected to respective various sensors of the sensor 110, a key input port connected to the terminal input section 130, a display control port connected to the terminal display 140, a voice control port connected to the voice output section 150 and a memory port connected to the memory 420. As shown in FIG. 18, the processor 430 has as various programs a current position recognizer 181 which operates as current position information acquiring unit, a destination recognizer 182 which operates as destination information acquiring unit, a guidance providing section 183, a display controller 184, a map matching section 185 and a coordinate matching section 186.

The current position recognizer 181 recognizes the current position of the vehicle. The information acquired by the current position recognizer 181 is appropriately stored in the memory 420.

The destination recognizer 182 typically acquires destination information on the destination of the vehicle as selected and input by operating the terminal input section 130 and recognizes the position of the destination. The destination information recognized by the destination recognizer 182 is appropriately stored in the memory 420.

The guidance providing section 183 provides guidance for driving the vehicle to support the user on the basis of the information on the traveling route and the information on the map guidance information acquired in advance in response to the running condition of the vehicle and stored in the memory 420.

The map matching section 185 operates for map matching processing necessary for displaying the current position of the vehicle as recognized by the current position recognizer 181 on the map obtained from the server unit 500.

The coordinate matching section 186 operates for coordinate matching processing necessary for determining if the pieces of information on two nodes N contained in the matching data MM of the map information obtained from the server unit 500 as spot information indicate the same and identical spot or not.

The server unit 500 is adapted to exchange information with the terminal unit 400 via the network 300. The server unit 500 is also adapted to acquire various pieces of information from other servers (not shown) of various governmental administration offices such as Meteorological Agency and Metropolitan Police Department, civil organizations, VICS and enterprises via the network 300. Pieces of information it acquires include meteorological information, VICS data on traffic jams, traffic accidents, road construction works, traffic control operations and so on, shop information on various stores and shops including gas stands and restaurants, information to be utilized for moving vehicles. As shown in FIG. 19, the server unit 500 has an interface 510, an input section 520, a display 530, a storage 540, a CPU (central processing unit) 550 and so on.

The interface 510 performs a predetermined input interface processing operation on the server signal Ssv input to it via the network 300 and outputs the processed signal to the CPU 550 as processed server signal Sc. Additionally, as a processed server signal Sc to be transmitted from the CPU 550 to the terminal units 400 is input to it, the interface 510 performs a predetermined output interface processing operation on the processed server signal Sc that is input to it and outputs the processed signal to the terminal units 400 via the network 300 as server signal Ssv. It may be so arranged that the server signal Ssv is output only to a predetermined terminal unit 400 according to the information contained in the processed server signal Sc.

Like the terminal input section 130, the input section 520 typically includes a keyboard and a mouse as well as various operation buttons and operation knobs (not shown) to be used for input operations. The operation buttons and the operation knobs are used to specify operations of the server unit 500, to specify and input information to be stored in the storage 540 and to update the information stored in the storage 540. In response to an operation of the vehicle user for specifying and inputting items, the input section 520 outputs a predetermined signal Sin to the CPU 550 to specify and input the items. In addition to or in place of the operation buttons and the operation knobs, the input section 520 may include a touch panel that may be arranged at the display 530 for input operations and a voice input section.

Like the terminal display 140, the display 530 is controlled by the CPU 550 and adapted to display images for signal Sdp from the CPU 550. Images that are displayed on the display 530 include those retrieved from the storage 540 and those acquired from external servers via the network 300.

The storage 540 readably stores various pieces of information received from the terminal units 400 and external servers such as map information for maps as shown in FIGS. 2 and 3 and a traffic jam prediction table 10 as shown in FIG. 4. The storage 540 also readably stores calendar templates 20 correlated to each of the terminal units 400 that are connected to the server unit 500 via the network 300 as shown in FIG. 5. More specifically, the storage 540 has a various information storage area for storing various pieces of information, a map information storage area that operates as map information storage unit for storing map information, a traffic jam prediction table storage area that operates as statistic traffic information storage unit for storing a traffic jam prediction table 10 and a calendar storage area for storing calendar templates 20.

While the storage 540 has four storage areas in the above description, this embodiment is by no means limited thereto. In other words, the storage 540 may not have such storage areas or may have additional storage areas. The storage 540 may include drives or drivers for readably storing data on storage mediums such as HDs (hard disks), DVDs (digital versatile disks), optical disks and memory cards. It is also adapted to store the information input by operating the input section 520 and update the information input by operating the input section 520 and stored in it. The storage 540 additionally stores various application programs to be developed on the OS (operating system) of the navigation system 200 that controls the operation of the entire navigation system 200.

The storage 540 stores retrieval information necessary for acquiring information on a predetermined spot as map information. More specifically, retrieval information include information on the designations of prefectures, cities, towns, villages, districts and areas that are used to pinpoint a spot, guidance information and information on shops that are also used to pinpoint a spot. Retrieval information is stored to show a table structure where pieces of information on items are arranged hierarchically in the form of a tree structure.

The storage 540 additionally stores personal information relating to the users of the navigation system 200 who utilizes the navigation system 200 by using any of the terminal units 400. Personal information may include the name and the address of each user and the ID number and the password assigned to each user as well as the type of each of the terminal units 400 that is used when utilizing the navigation system 200 and the address number of each of the terminal units 400 that is used for transmitting information to and receiving information from the terminal unit 400. Additionally, the storage 540 stores various pieces of information to be used for performing navigation processing operations that are readable to the CPU 550.

As shown in FIG. 20, the CPU 550 has as programs stored in the storage 540 a map output section 551, a VICS data acquirer 552 that operates as traffic information acquiring unit, a traffic jam condition recognizer 553 that operates also as traffic map generator, a server coordinate matching section 554, a route processor 555 that operates as moving-condition-related information generating unit and traveling route searching unit, an information retriever 556, a calendar modifying section 557, a timer 558 and so on.

The map output section 551 is adapted to respond to information that requests delivery of information relating the map information contained in the processing server signal Sc input to it. Then, it retrieves the requested information from the map information stored in the storage 540, e.g., display data VM and matching data MM that correspond to a predetermined area, and reads out as memory signal Sm. Then, it converts the memory signal Sm it reads out into processing server signal Sc and outputs it to selected ones or all of the terminal units 400 via the interface 510 and the network 300 according to the processing server signal Sc so as to deliver the requested information of the map information.

Like the VICS receiver 120 of the first embodiment, the VICS data acquirer 552 acquires VICS data from the VICS (not shown) on the basis of the input processing server signal Sc and according to the information relating a request for searching the traveling route as contained in the processing server signal Sc.

The traffic jam condition recognizer 553 generates current traffic jam information as memory signal Sm from the VICS data acquired by the VICS data acquirer 552 on the basis of the input processing server signal Sc and according to the information relating a request for searching the traveling route as contained in the processing server signal Sc. Additionally, like the traffic jam condition recognizer 553 of the first embodiment, the traffic condition recognizer 553 of this embodiment performs a processing operation on the basis of the input processing server signal Sc and according to the information relating to a request for searching the traveling route, taking the traffic jam information and the predicted traffic jams as contained in the processing server signal Sc into consideration, to generate traffic jam prediction information as memory signal Sm. Then, it appropriately converts the generated memory signal Sm into a processing server signal Sc and outputs it to selected ones or all of the terminal units 400 via the interface 510 and the network 300 according to the processing server signal Sc so as to notify the current traffic jam condition and the predicted traffic jams that will take place for a related vehicle provided with a terminal unit 400 before getting to the destination.

Like the e.g. coordinate matching section 186 of each of the above described terminal unit 400, the server coordinate matching section 554 operates for coordinate matching processing necessary for determining if the pieces of information on two nodes N contained in the matching data MM of the map information indicate the same and identical spot or not.

Like the route processor 188 of the first embodiment, the route processor 555 operates for processing and generates information on the traveling route and the traveling time as memory signal Sm on the basis of the input processing server signal Sc and according to the information relating a request for searching the traveling route as contained in the processing server signal Sc. Then, it appropriately converts the generated memory signal Sm into a processing server signal Sc and outputs it to selected ones or all of the terminal units 400 via the interface 510 and the network 300 according to the processing server signal Sc so as to notify the traveling route and the traveling time for a related vehicle provided with a terminal unit 400 before getting to the destination.

Like the information retriever 189 of the first embodiment, the information retriever 556 of this embodiment hierarchically retrieves the retrieval information stored in the storage 540 typically on the basis of item information and reads it as memory signal Sm on the basis of the input processing server signal Sc and according to the information relating a request for searching the traveling route as contained in the processing server signal Sc. Then, it appropriately converts the generated memory signal Sm into a processing server signal Sc and outputs it to selected ones of the terminal units 400 via the interface 510 and the network 300 according to the processing server signal Sc so as to deliver the retrieval information.

The calendar modifying section 557 recognizes various pieces of terminal-specific information including information on a calendar modifying request for modifying any of the calendar templates 20 and information on the ID number for identifying the terminal unit 400 that generates the calendar modifying request on the basis of the input processing server signal Sc, the pieces of information being contained in the signal. Then, like the calendar modifying section 190 of the first embodiment, the calendar modifying section 557 appropriately updates the calendar templates 20 stored in the storage 540 and correlated to the terminal unit 400 identified by the terminal-specific information stored in the storage 540 by way of a processing operation.

A timer 558 recognizes the current clock time on the basis of the reference pulse of an internal clock, for instance. Then the timer 558 appropriately outputs clock time information on the current clock time it recognizes.

The CPU 550 performs computational operations according to the signal Sin input from the input section 520 as a result of an input operation and generates signal Sdp and other signals. Then, it appropriately outputs the generated signals to the display 530, the interface 510 and the storage 540 to operate them according to the input information.

### [Operation of the navigation system]

Now, the operation of the navigation system 200 will be described by referring to the drawings. However, the processing operations that are substantially same as those of the first embodiment will be described only briefly.

### (Calendar template modifying process)

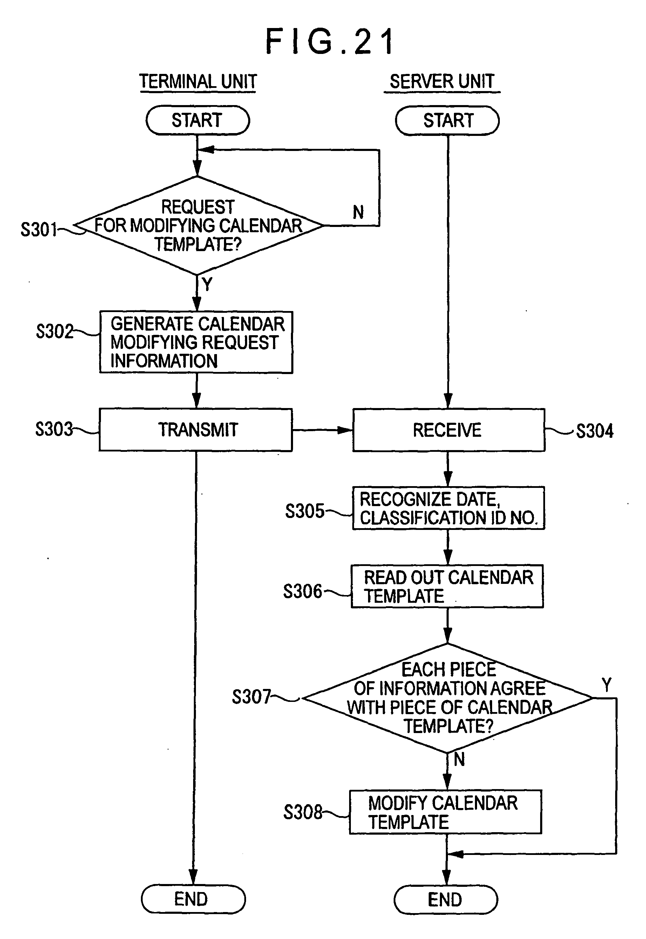

Firstly, the calendar template modifying process will be described by referring to FIG. 21 as an operation of the navigation system 200. Assume here that the user modifies a calendar template 20 as shown in FIG. 5 and stored in the storage 540 of the server unit 500 on the basis of the information he or she recognized typically from radio and/or TV broadcasting, telling that a festival will be held on 5th in City A. FIG. 21 is a flow chart of the operation of modifying a calendar template.

Firstly, the user of the vehicle turns on the power source of the terminal device 400 of the vehicle to feed power to the device. As power is supplied to the device, the processor 430 controls the terminal display 140 and causes it to display a main menu and prompt the user to specify and input a specific operation of the terminal unit 400.

Then, as shown in FIG. 21, the user operates the terminal input section 130 to specify an operation of modifying the calendar templates 20. As the processor 430 recognizes by way of the calendar modifying section 190 the input specifying an operation of modifying the calendar templates 20 (Step 301), it has the terminal display 140 display an image that prompt the user to specify and input a date and an event necessary for modifying the calendar templates 20.

Thereafter, as the user specifies and inputs a date and an event by operating the terminal input section 130, following the instructions in the displayed image, the processor 430 recognizes the date and the event. Then, the processor 430 generates a calendar modifying request containing the date and the event it recognizes (Step S302) and has the transceiver 410 transmit the generated calendar modifying request to the server unit 500 via the network 300. When transmitting the calendar modifying request, the processor 430 also transmits the terminal-specific information for identifying the terminal unit 400 in question (Step S303).

As the server unit 500 receives the calendar modifying request and the terminal-specific information transmitted from the terminal unit 400 (Step S304), it has the calendar modifying section 557 recognize the date and the event contained in the received calendar modifying request (Step S305). More specifically, the calendar modifying section 557 recognizes the specified date as 5th, and the classification ID number correlated to the event as "ID4".

Thereafter, the calendar modifying section 557 reads out the calendar template 20 correlated to the terminal unit 400 that transmitted the calendar modifying request on the basis of the terminal-specific information received in the Step S304 (Step S306). Then, the calendar modifying section 557 determines if the pieces of information it recognizes in the Step S305 agree with the pieces of information contained in the calendar template 20 that is read out in the Step S306 or not (Step S307).

If the calendar modifying section 557 determines in the Step S307 that the sets of pieces of information agree with each other, it does not modify the calendar template 20 and terminates the processing operation. If, on the other hand, it determines that the two sets of pieces of information do not agree with each other, it modifies the calendar template 20 on the basis of the various pieces of information it recognizes in the Step S305 (Step S308). More specifically, since the classification ID number of the 5th as recognized in the Step S305 is "ID4" and the classification ID number of the 5th as recognized from the calendar template 20 is "ID1", the calendar modifying section 190 modifies the classification ID number of the 5th from "ID1" to "ID4" as shown in FIG. 8. Then, the calendar modifying section 190 stores the calendar template 20, in which the classification ID number is modified, in the storage 540, correlating it to the terminal unit 400 that transmitted the calendar modifying request, and terminates the processing operation.

### (Process of searching for the traveling route)

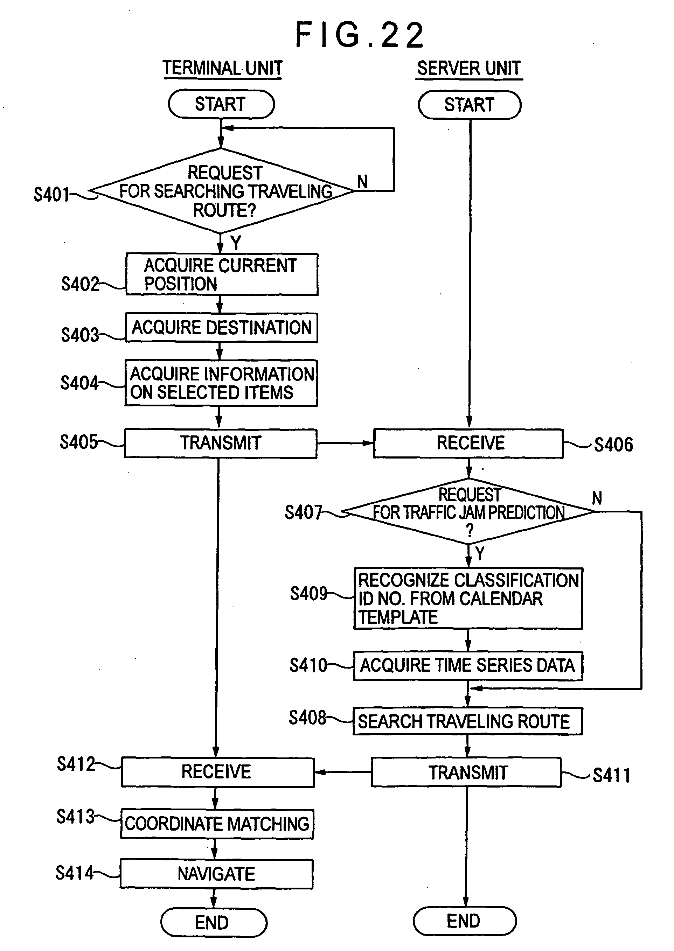

Now, the process of searching for the traveling route of the navigation system 200 will be described by referring to FIG. 22. FIG. 22 is a flow chart of the operation of searching for a traveling route.

Firstly, the user operates the terminal input section 130 to input, for example, a command for searching the traveling route of the vehicle as shown in FIG. 22. As the processor 430 recognizes the input of the command for searching the traveling route of the vehicle (Step S401), the processor 430 causes the terminal display section 140 to display an image prompting the user to enter various pieces of information necessary for searching the traveling route such as the destination, the shortest traveling distance, the shortest traveling time and the necessity of predicting traffic jams.

Then, as the processor 430 recognizes the various pieces of information necessary for searching the traveling route, it has the current position recognizer 181 recognize the current position of the vehicle (Step S402) and the destination recognizer 182 recognize the specified and input destination (Step S403). Additionally, the processor 430 acquires the information on the selected items (Step S404). The information on the current position, the destination and the selected items are appropriately stored in the memory 420.

Thereafter, the processor 430 controls the transceiver 410 and has it transmit the information on the current position, the destination and the selected items stored in the memory 420 to the server unit 500 along with the signal requesting the server unit 500 to search the traveling route. When transmitting the various pieces of information, the processor 430 also transmits the terminal-specific information for identifying the terminal unit 400 in question (Step S405).

As the server unit 500 receives the various pieces of information transmitted from the terminal unit 400 (Step S406), it has the route processor 555 of the CPU 550 determine if the information on the selected items it receives contains a request for prediction of traffic jams or not (Step S407).

If the CPU 550 determines in the Step S407 by means of the route processor 555 that no request for prediction of traffic jams is contained, it acquires the VICS data by means of the VICS data acquirer 552. Then, the CPU 550 has the traffic jam condition recognizer 553, generate current traffic jam information of an area containing the current position and the destination from the obtained VICS data. Thereafter, the CPU 550 has the route processor 555 perform a route searching processing operation of searching for the traveling route from the current position of the vehicle to the destination on the basis of the information on the current position, the destination, the selected items and the current traffic jam condition (Step S408).

More specifically, the route processor 555 generates traveling route information on a certain number of candidate traveling routes, e.g., five candidate traveling routes, that meets the requirements of the user, using the map information stored in the storage 540. It additionally generates traveling time information by determining the traveling time that needs to be spent before getting to the destination for each of the candidate traveling routes.

If, on the other hand, the route processor 555 determines in the Step S407 that a request for prediction of traffic jams is contained, it acquires the clock time from the timer 558 and recognizes the current date from the acquired clock time. Then, the CPU 550 has the traffic jam condition recognizer 553 read out the calendar template 20 that is correlated to the terminal unit 400 that requests for searching the traveling route from the storage 540 on the basis of the terminal-specific information received in the Step S406. Then, the traffic jam condition recognizer 553 retrieves and recognizes the classification ID number of the date recognized from the read out calendar template 20 (Step S409). Additionally, it recognizes the current position and the destination of the vehicle from the information on the current position and the destination received in the Step S406. Then, the traffic jam condition recognizer 553 retrieves and acquires the time series data 12i that corresponds to the recognized classification ID number and contains the current position and the destination from the traffic jam prediction table 10 stored in the storage 540 (Step S410).

Thereafter, the CPU 550 performs the processing operation of the Step S408. More specifically, the CPU 550 has the route processor 555 generate current traffic jam information by means of the traffic jam condition recognizer 553. Then, the CPU 550 detects a plurality of candidate traveling routes on the basis of the acquired information on the current position, the destination, the selected item and the current traffic jam condition and narrows them down to a fewer number of candidate traveling routes on the basis of the acquired information on the selected items to generate information on the candidate traveling routes that meet the requirements of the user.

Then, the CPU 550 has the traffic jam condition recognizer 553 acquire the current time and day from the timer 558. Then, traffic jam condition recognizer 553 determines the expected arrival time of getting to a selected position on each of the candidate traveling routes contained in the information on the candidate traveling routes generated by the route processor 555 on the basis of the current traffic jam information and the current time and day it acquires. Then, the traffic jam condition recognizer 553 predicts the traffic jam on each of the candidate traveling routes at the expected arrival time of getting to the selected position on the basis of the time series data 12i acquired in the Step S410 and generates traffic jam prediction information on the condition of each of the predicted traffic jams.

Then, the CPU 550 narrows down the candidate traveling routes in the candidate traveling route information to a fewer number of candidate traveling routes by the route processor 555 on the basis of the current traffic jam information and the traffic jam prediction information to generate traveling route information on a number of candidate traveling routes, five candidate traveling route for instance, that meet the requirements of the user. Additionally, the route processor 555 determines the traveling time necessary for getting to the destination by each of the candidate traveling routes in the traveling route information to generate traveling time information.

After the Step S408, the server unit 500 controls the interface 510 on the basis of the terminal-specific information received in the Step S406 and appropriately transmits the traveling route information obtained as a result of the route searching processing operation, the traffic jam prediction information, the traveling time information and the current traffic jam information to the terminal unit 400 in question along with map information (Step S411). It may acquire the matching data MM in advance on the basis of the information on the current position of the vehicle. When transmitting the map information, it is sufficient for the server unit 500 to transmit the matching mesh information MMx of the matching data MM that contain the nodes N and the links L for the roads of the traveling routes, the display mesh information VMx of the display data VM for other areas, the name information VMxA and the background information VMxC in the area that corresponds to the matching mesh information MMx.

As the processor 430 of the terminal unit 400 receives the various pieces of information (Step S412), it performs coordinate matching processing operations for the received matching data MM (Step S413) and recognizes the road conditions, or the conditions on the connections of the roads, which are then appropriately stored in the memory 420. Additionally, the processor 430 operates the display controller 184 so as to have the terminal display 140 displays the information on the computationally determined five candidate traveling routes and an image prompting the user to select one of the candidate traveling routes. The traveling route is defined when the user selects one of the candidate traveling routes.

Thereafter, the processor 430 controls the terminal display 140 by the display controller 184 so as to have it superimpose an icon that indicates the current position of the vehicle on the acquired map on the basis of the information on the current position and also the traveling route selected by the user, the traffic jam prediction information, the expected traveling time and the current traffic jam information. For example, assume here that no traffic jam takes place currently on the roads that connect the current position S1 and the destination G with the shortest distance, while no traffic jam is predicted at any position on the traveling route for getting to the destination by the traffic jam recognizer 553 of the server unit 500. In such a situation, various pieces of information as described above by referring to the first embodiment are superimposed as shown in FIG. 10A.

Subsequently, the processor 430 recognizes the running condition of the vehicle on the basis of the data output from the sensor 110. Additionally, the processor 430 by way of the guidance providing section 183 notifies the user of guidance information for guiding the travel of the vehicle on the basis of the recognized moving condition of the vehicle and the route guidance information contained in the traveling route information (Step S414). The guidance information is provided to the user by way of the terminal display and/or in voice.

Thereafter, the server unit 500 acquires VICS data by the VICS data acquirer 552. Then, if the moving condition of the vehicle can be influenced and it can be forced to alter the traveling route according to the VICS data acquired by the VICS data acquirer 552, the CPU 550 generates information for confirming a rerouting operation for the purpose of confirming if the route searching operation needs to be repeated or not. Then, it controls the interface 510 to transmit the information for confirming a rerouting operation to the terminal unit 400 in question on the basis of the terminal-specific information received in the Step S406.

Upon receiving the information for confirming a rerouting operation, the processor 430 of the terminal unit 400 that receives the information has the display controller 184 display an image for prompting the user to decide if he or she wants to repeat the route searching operation or not and input the decision along with information on the destination and selected items on the terminal display 140. Thereafter, upon recognizing the input for the decision of the user on repeating the route searching operation or not and the information on the destination and selected items, the processor 430 generates a rerouting request information containing the information it recognizes. Then, the processor 430 controls the transceiver 410 to transmit the rerouting request information and the terminal-specific information to the server unit 500.

Upon receiving the various piece of information transmitted from the terminal unit 400, the server unit 500 recognizes if the route searching operation is to be repeated or not on the basis of the rerouting request information it receives. It does not perform any processing operation when it recognizes that the route searching operation does not need to be repeated. When, on the other hand, it recognizes that the route searching operation needs to be repeated, the CPU 550 of the server unit 500 repeats the route searching operation from the Step S407 to Step S411 in response to the rerouting request information. Then, the server unit 500 controls the interface 510 according to the terminal-specific information it receives and transmits the various pieces of information obtained as a result of the repeated route searching operation along, if necessary, with map information, to the terminal unit 400 in question.

As the processor 430 of the terminal unit 400 receives the various pieces of information from the server unit 500, it performs the processing operation of the Step S412 and that of the Step S413. If it is recognized by the traffic jam condition recognizer 553 of the server unit 500 that a traffic jam takes place on the road R12 but it is predicted that no traffic jam will take place at any selected position on the route to the destination G, various pieces of information as shown in FIG. 10B are superimposed on the map being displayed as in the case of the first embodiment.

Assume now that subsequently the server unit 500 repeats the route searching operation in response to the information requesting a rerouting operation from the terminal unit 400 and the terminal unit 400 receives the various pieces of information obtained as a result of repeating the route searching operation and that the traffic jam condition recognizer 553 recognizes that the traffic jam on the road R12 is not dissolved yet and traffic jam also takes place the route R13 to the destination G. Then, various pieces of information as shown in FIG. 10C are superimposed on the map being displayed as in the case of the first embodiment.

### (Transition of traffic jam displaying process)

Now, the transition of traffic jam displaying process will be described as an operation of the navigation system 200.

Firstly, as the user recognizes the displayed image of the map where the traveling route of the vehicle is superimposed as shown in FIG. 10B, he or she may operate the terminal input section 130 to generate a transition information request, requesting the terminal display 140 to display the transition of he traffic jam in order to recognize if the traffic jam is increasing or decreasing. More specifically, the user may operate the command button 32 in the navigation image 30 as shown in FIG. 11 by means of the terminal input section 130 for an input operation to generate a request for transitional information as in the case of the first embodiment. Then, as a result, the processor 430 of the terminal unit 400 has the transceiver 410 transmit the request to the server unit 500 by way of the network 300.

As the traffic jam condition recognizer 553 of the server unit 500 recognizes the request transmitted from the terminal unit 400, it generates traffic jam prediction information for every 30 minutes, for instance, after the current clock time on the basis of the current clock time it acquires from the timer 558 and the time series data 12i it acquires on the basis of the calendar template 20. Additionally, the route processor 555 generates information on the predicted position of the vehicle, which is information on the transitional position of the vehicle after the elapse of 30 minutes from now, by computing the predicted position of the vehicle on the assumption that the vehicle travels along the traveling route selected in the above described processing, taking the traffic jam prediction information into consideration. Then, the generated traffic jam prediction information and the predicted position information are transmitted by the CPU 550 to the terminal unit 400 via the interface 510 and the network 300.

Then, the terminal unit 400 acquires the traffic jam prediction information and the predicted position information transmitted from the server unit 500 by the transceiver 410 and appropriately stores them in the memory 420 with the map information and the current traffic jam information also acquired from the server unit 500. Thus, after transmitting the request for transitional information, the terminal unit 400 acquires the various pieces of information from the server unit 500. Subsequently, the display controller 184 of the terminal unit 400 generates a traffic jam prediction mark Jy that is the icon, or image data, that correspond to the traffic jam prediction information after the elapse of every 30 minutes from now as stored in the memory 170 and superimposes it on the map being displayed in the map display area 31 of the navigation image 30 as shown in FIG. 11 at the position corresponding to the predicted respective positions of the vehicle after the elapse of every 30 minutes. At the same time, the display controller 184 also superimposes the icon S that represents the position of the vehicle as determined from the information on the predicted position of the vehicle after the elapse of every 30 minutes on the map at the corresponding position. Then, the display controller 184 causes the terminal display 140 to display the navigation preview image 40 in the map display area 41 with the icons superimposed on it as is the case with the first embodiment. The position of the traffic jam prediction mark Jy and that of the icon S are updated, for example, every 0.5 seconds or 1 second according to the traffic jam prediction information and the information on the predicted position of the vehicle after the elapse of every 30 minutes.

If the user recognizes the transition of the traffic jam condition from the displayed navigation preview image 40 and the traffic jams on the traveling route that is already defined will be expected to dissolve soon, the user may input a request for researching for the traveling route, or rerouting, by operating the terminal input section 130. As the route processor 555 of the server unit 500 recognizes the input of the rerouting request via the network 300, it performs the processing operation of FIG. 22 for another time. A rerouting operation may also be conducted when the traveling route is computationally defined not on the basis of the predicted traffic jams but only on the current traffic jam condition and when a traffic jam is expected to arise on the traveling route and become aggravated with time as a result of recognizing the transition of the traffic jam condition.

In short, the route processor 555 computationally generates traveling route information on several, five for instance, candidate traveling routes and transmits it to the terminal unit 400 via the network 300. Then, the terminal unit 400 has the display controller 184 display the generated traveling route information on the computationally determined five candidate traveling routes on the terminal display 140 and prompts the user to select one of the candidate traveling routes. As the user selects one of the candidate traveling routes by way of an input operation on the basis of the transition of the traffic jam condition, the selected traveling route is superimposed on the map of the terminal display 140 along with current traffic jam information, traffic jam prediction information, traveling time information and the icon representing the current position of the vehicle as determined on the basis of the information on the current position of the vehicle for the purpose of navigation.

Thus, it is possible to select a new traveling route that reliably accommodates the transition of the traffic jam condition by a rerouting operation that is conducted after recognizing the transition of the traffic jam condition on the basis of the traffic jam condition after the elapse of a predetermined time from the current clock time. It may be so arranged that the computationally determined other candidate traveling routes are displayed again and a new traveling route is selected from them and displayed for the purpose of navigation.

### [Advantages of the 2nd Embodiment]

As described above in detail, as the server unit 500 recognizes the request for transitional information on the traffic jam condition from the terminal unit 400, it generates traffic jam prediction information on the basis of the traffic jam prediction table 10 and transmits it to the terminal unit 400. Then, as in the case of the first embodiment, the display controller 184 of the terminal unit 400 has the terminal display 140 display a map with a traffic jam prediction mark Jy representing the predicted traffic jam information for a predetermined time, e.g., 30 minutes, after the current clock time superimposed on the map being displayed. Thus, with this arrangement, the user can easily recognize the predicted traffic jams in the future as well as the expected transition of the predicted traffic jams. With conventional techniques for simply displaying predicted traffic jams, when the traveling route is changed by detecting a new traveling route in order to avoid a predicted traffic jam, the vehicle may consequently make a detour if the current traffic jam on the road ahead is dissolved before the vehicle gets there. To the contrary, with this embodiment, it is no longer necessary to make such a detour because it recognizes the transition of the traffic jam and the user can select a traveling route of the shortest traveling distance for easy and effective traveling to a great convenience on the part of the vehicle user.

Additionally, in the second embodiment, the server unit 500 stores a traffic jam prediction table 10 that is utilized for traffic jam predictions and involves a relatively large amount of data along with map information. Therefore, the terminal units 400 can be made to have a simple configuration and, as the server unit 500 updates the map information and the traffic jam prediction table 10, the terminal units 400 can share the updated information to improve the ability of the navigation system 200 in terms of maintenance, management and operation. At the same time, the terminal units 400 are adapted to acquire the most updated information so that the user of a vehicle carrying such a terminal unit can be navigated according to the most updated information to a great convenience on the part of the user.

Additionally, the server unit 500 that stores the map information and the traffic jam prediction table 10 searches the traveling route of the vehicle and delivers information on the traveling route to the terminal unit 400. With this arrangement, the processing load of the terminal units 400 can be reduced. In other words, the terminal units 400 are not required to have a large processing capacity so that terminal units 400 can be made to have a simple configuration. Therefore, mobile phones that are compact, lightweight and less expensive may be used for such terminal units 400 to expand the market for such navigation systems.

Additionally, the processor 180 of each of the terminal unit 400 and the CPU 550 of the server unit 500 are realized by programs to facilitate the use of map information and further expand the market for such navigation systems. Still additionally, the programs may be recorded on recording mediums so that a computing unit, or a computer, can read them in order to facilitate the use of the map information and that of the programs to further expand the market for such navigation system. The computing unit may not necessarily be a single computer but a plurality of computers that are combined to form a network. Alternatively, the computing unit may be a circuit board on which CPUs, microcomputers and other elements are mounted along with a number of electronic parts.

### [Modifications to the Embodiments]

The present invention is by no means limited to the above described embodiments, which may be modified and altered without departing from the scope of the present invention.

For example, while a traffic prediction mark Jy corresponding to the traffic jam prediction information is superimposed on the map being displayed on the terminal display 140 with time intervals to display the transition of the traffic jam in the above description, it may alternatively be so arranged that a traffic jam prediction map is prepared with a traffic jam prediction mark Jy superimposed on it with time intervals and the most updated generated traffic jam prediction map is displayed on the terminal display 140 to replace the preceding traffic jam prediction map. With this arrangement, the user can easily recognize the transition of the traffic jam and the display of the traffic jam prediction map may be very smooth because the current traffic jam prediction map is replaced by a new one that has been generated in advance.

As described above, a moving body is not limited to a vehicle for the purpose of the present invention and may alternatively be an aircraft or a ship. When the user carries the terminal unit 400 as a portable device, the current position of the user may be recognized as that of the moving body. Additionally, as described above, the terminal unit 400 may be a mobile phone or PHS that the user carries and the server unit 500 may be the base station of the mobile phone or PHS system so that the mobile phone or PHS acquires information from the base station. In any case, the present invention is most effectively applicable to a moving body such as a vehicle to which a traffic jam can be an obstacle against its movement.

For the purpose of the present invention, the traffic condition is not necessarily limited to traffic jam condition and may include any situations relating to the movement of a moving body.

While a navigation image 30 is displayed as preview for the moving body traveling along the traveling route in the above description, the navigation image 30 may alternatively be a map of a predetermined area showing the transition of the traffic condition if the operation of searching for the traveling route is not conducted.

It may be not necessary to notify the user of the traveling route. Then, alternatively, the transition of the traffic condition may be displayed on the map being displayed on the display screen, which may be that of a personal computer. While candidate traveling routes are narrowed down to a fewer number of candidate routes on the basis of the information on the current position, the destination and the selected items before transmission in the above description, the traveling route may be selected, or searched, only on the basis of the information on the current position and the destination.

While retrieval information is retrieved in the above description, such an arrangement may be omitted.

While the information on the current position to be recognized by the current position recognizer is acquired on the basis of the data output from the various sensors and the GPS data output from the GPS receiver in the above description, any other technique may be used to recognize the current position of a moving body. As described above, the assumed current position input at the terminal input section 130 may alternatively be recognized as current position.

While many of the functions are realized in the form of programs in the above description, some of them may be replaced by hardware such as circuit boards and/or elements such as ICs (integrated circuits). The market for navigation systems according to the present invention will expand when the programs are readably stored in a separate recording medium for the convenience of handling.

While the server unit 500 stores map information and the traffic jam prediction table 10 in the above described second embodiment, it may alternatively be so arranged that at least either the map information or the traffic jam prediction table 10 is stored in the terminal units 400.

While the transceiver 410 is arranged in the terminal unit 400 in the above description, the transceiver 410 may be separated from the terminal unit 400 and a mobile phone or PHS may be used as the transceiver 410 so that information may be exchanged between the transceiver 410 and the terminal unit 400.

While statistic traffic information is prepared by statistically processing past traffic conditions, using temporal elements, so as to be able to predict traffic jams when a predetermined time has elapsed from the current clock time to generate traffic jam prediction information for the future and notify the user of the transition of the traffic jam condition by displaying the traffic jam prediction information for the future as preview in the above description, it may alternatively be so arranged as to accumulate VICS data and notify the user of the transition of the traffic jam condition by displaying the past traffic conditions as preview, using the accumulated VICS data. Still alternatively, it may be so arranged that the positions of the vehicle in the past are recognized with predetermined time intervals from the positional information of the past stored separately or by calculating back and to generate transitional positional information and icon S is superimposed on the map being displayed on the terminal display on the basis of the transitional positional information. With this arrangement of displaying the transition of the traffic condition of the past, the user may be able to display the moving route of the vehicle of a past travel and see it like a souvenir of the travel.

Furthermore, any of the arrangements and the procedures of a device or a system according to the present invention may be modified and altered appropriately without departing from the scope of the present invention.

### [Advantages of the Embodiments]

With any of the above described modified embodiments, as the processor 180 acquires VICS data that provide traffic information including map information and information on the traffic condition of the vehicle including the traffic jam condition and recognizes a request for displaying the transition of the traffic condition or the transition of traffic jams, it causes the display controller 184 to display a map where an image representing the traffic jam prediction information after the elapse of a predetermined time is superimposed on the terminal display 140 at regular intervals of a predetermined time period. With this arrangement, the user can easily recognize the predicted traffic jams in the future as well as the expected transition of the predicted traffic jams. With conventional techniques for simply displaying predicted traffic jams, when the traveling route is changed by detecting a new traveling route in order to avoid a predicted traffic jam, the vehicle may consequently make a detour if the current traffic jam on the road ahead is dissolved before the vehicle gets there. To the contrary, with this embodiment, it is no longer necessary to make such a detour because it recognizes the transition of the traffic jam and the user can select a traveling route of the shortest traveling distance for easy and effective traveling to a great convenience on the part of the vehicle user.

Additionally, the arrangement of superimposing a traffic jam prediction mark Jy representing traffic jam prediction information on the map being displayed on the terminal display 140 with predetermined time intervals to show the transition of the traffic jam information is replaced by an arrangement of a traffic jam prediction map is prepared with a traffic jam prediction mark Jy superimposed on it with time intervals and the most updated generated traffic jam prediction map is displayed on the terminal display 140 to replace the preceding traffic jam prediction map. With this arrangement, the user can easily recognize the transition of the traffic jam along with the traffic jam prediction for the future. With conventional techniques for simply displaying predicted traffic jams, when the traveling route is changed by detecting a new traveling route in order to avoid a predicted traffic jam, the vehicle may consequently make a detour if the current traffic jam on the road ahead is dissolved before the vehicle gets there. To the contrary, with the modified embodiments, it is no longer necessary to make such a detour because it recognizes the transition of the traffic jam and the user can select a traveling route of the shortest traveling distance for easy and effective traveling to a great convenience on the part of the vehicle user.

Additionally, the map information stored in the server unit 500 is distributed to the terminal units 400 via the network 300 so that, if the map information is modified, the terminal units 400 do not need to modify the map information to a great convenience on the part of the terminal units 400.

## Claims

1. A traffic condition notifying device (100) comprising:
a map information acquirer for acquiring map information;
a traffic information acquirer (120) for acquiring traffic information on traffic conditions of predetermined area surrounding the current position of a moving body;
a request information recognizer for recognizing a request for predicted traffic jam information to display a transition of the traffic condition; and
a display unit (140) for displaying the map information, **characterized by**
a display controller (180) arranged to control the display unit to continually display the map information and the traffic information at plural predetermined time points in a superimposing manner when the request information recognizer recognizes the request for predicted traffic jam information.

2. The traffic condition notifying device (100) according to claim 1, wherein the display controller (180) generates traffic condition map information having the traffic information superimposed with the map information and displays the generated traffic condition map information at predetermined time points in a switched manner. H

3. The traffic condition notifying device (100) according to claim 1, wherein the display controller (180) displays the traffic information in time series from the current moment onwards.

4. The traffic condition notifying device (100) according to any one of claims 1 through 3, further comprising:
a current position acquirer for acquiring information on the current position of the moving body;
a destination information acquirer for acquiring information on the destination of the moving body;
a traveling route searcher for searching the traveling route of the moving body, using the map information, on the basis of the information on the current position and the information on the destination; and
a moving condition generator for generating information on transitional positions of the moving body on the traveling route at predetermined time intervals on the basis of the information on the current position and the map information,
wherein the display controller (180) continually displays the map information and a position of the moving body at the plural predetermined time points in a superimposing manner based on the information on the transitional positions.

5. The traffic condition notifying device (100) according to any one of claims 1 through 4, wherein the traffic information acquirer (120) acquires traffic information containing traffic jam information for the surroundings of the moving body, and
wherein the display controller (180) displays the map information with the traffic jam information superimposed on the map information.

6. The traffic condition notifying device (100) according to any one of claims 1 through 5, wherein the traffic information acquirer (120) acquires the traffic information on the basis of statistic traffic information obtained by statistically processing previous traffic conditions.

7. A traffic condition notifying system comprising:
a server unit (160) having a storage for storing map information; and
the traffic condition notifying device (100) according to any one of claims 1 through 6 and arranged to acquire the map information from the server unit via a network.

8. The traffic condition notifying system according to claim 7,
wherein the server unit (160) further includes a traffic condition map generator for generating traffic condition map information by superimposing the traffic information at the plural predetermined time points on the map information, and
wherein the display controller (180) of the traffic information notifying device is arranged to have the display unit display the traffic condition map information in a switched manner.

9. The traffic condition notifying system according to claim 7,
wherein the map information acquirer is arranged to acquire the map information from the server unit via a network, and
wherein the display controller (180) of the traffic information notifying device is arranged to display map information acquired by the map information acquirer on the display unit and superimpose the traffic information at the plural predetermined time points on the map information sequentially along a time series from the current moment onwards.

10. A traffic condition notifying method comprising the steps of:
acquiring map information and traffic information on the traffic conditions of a predetermined area surrounding the current position of a moving body; and
continually displaying the map information superimposed by traffic information at plural predetermined time points on a display unit by recognizing a request for predicted traffic jam information to display the transition of the traffic condition.

11. A traffic condition notifying program for executing the traffic condition notifying method according to claim 10 on a computer.

12. A recording medium storing the traffic condition notifying program according to claim 11 in a manner readable by a computer.

## Patentansprüche

1. Verkehrszustands-Benachrichtigungsvorrichtung (100), die umfasst:
eine Karteninformations-Erfassungseinrichtung zum Erfassen von Karteninformationen;
eine Verkehrsinformations-Erfassungseinrichtung (120) zum Erfassen von Verkehrsinformationen zu Verkehrszuständen eines vorbestimmten Gebietes, das die aktuelle Position eines sich bewegenden Körpers umgibt;
eine Informationsanforderungs-Erkennungseinrichtung zum Erkennen einer Anforderung von vorhergesagten Verkehrsstauinformationen, um einen Übergang des Verkehrszustands anzuzeigen; und
eine Anzeigeeinheit (140) zum Anzeigen der Karteninformationen, **gekennzeichnet durch**
eine Anzeigesteuereinheit (180), die eingerichtet ist, um die Anzeigeeinheit zu steuern, um kontinuierlich die Karteninformationen und die Verkehrsinformationen zu einer Vielzahl von vorbestimmten Zeitpunkten überlagernd anzuzeigen, wenn die Informationsanforderungs-Erkennungseinrichtung die Anforderung von vorhergesagten Verkehrsstauinformationen erkennt.

2. Verkehrszustands-Benachrichtigungsvorrichtung (100) nach Anspruch 1, wobei die Anzeigesteuereinheit (180) Verkehrszustands-Karteninformationen erzeugt, bei denen die Verkehrsinformationen mit den Karteninformationen überlagert sind, und die die erzeugten Verkehrszustands-Karteninformationen zu vorbestimmten Zeitpunkten vermittelt anzeigt.

3. Verkehrszustands-Benachrichtigungsvorrichtung (100) nach Anspruch 1, wobei die Anzeigesteuereinheit (180) die Verkehrsinformationen in einer Zeitreihe von dem aktuellen Moment an anzeigt.

4. Verkehrszustands-Benachrichtigungsvorrichtung (100) nach einem der Ansprüche 1 bis 3, die weiterhin umfasst:
eine Erfassungseinrichtung für aktuelle Position zum Erfassen von Informationen zu der aktuellen Position des sich bewegenden Körpers;
eine Zielortinformations-Erfassungseinrichtung zum Erfassen von Informationen zu dem Zielort des sich bewegenden Körpers;
eine Fahrstrecken-Sucheinrichtung zum Suchen der Fahrstrecke des sich bewegenden Körpers unter Verwendung der Karteninformationen auf der Grundlage der Informationen zu der aktuellen Position und der Informationen zu dem Zielort; und
einen Bewegungszustands-Generator zum Erzeugen von Informationen zu Übergangspositionen des sich bewegenden Körpers auf der Fahrstrecke zu vorbestimmten Zeitintervallen auf der Grundlage der Informationen zu der aktuellen Position und der Karteninformationen,
wobei die Anzeigesteuereinheit (180) die Karteninformationen und eine Position des sich bewegenden Körpers kontinuierlich zu der Vielzahl von vorbestimmten Zeitpunkten überlagernd auf Basis der Informationen zu den Übergangspositionen anzeigt.

5. Verkehrszustands-Benachrichtigungsvorrichtung (100) nach einem der Ansprüche 1 bis 4, wobei die Verkehrsinformations-Erfassungseinrichtung (120) Verkehrsinformationen mit Verkehrsstau-Informationen für die Umgebung des sich bewegenden Körpers erfasst, und
wobei die Anzeigesteuereinheit (180) die Karteninformationen mit den Verkehrsstau-Informationen überlagert auf den Karteninformationen anzeigt.

6. Verkehrszustands-Benachrichtigungsvorrichtung (100) nach einem der Ansprüche 1 bis 5, wobei die Verkehrsinformations-Erfassungseinrichtung (120) die Verkehrsinformationen auf Basis von statistischen Verkehrsinformationen erfasst, die aus statistischer Verarbeitung früherer Verkehrszustände gewonnen werden.

7. Verkehrszustands-Benachrichtigungssystem, das umfasst:
eine Servereinheit (160) mit einem Speicher zum Speichern von Karteninformationen und
die Verkehrszustands-Benachrichtigungsvorrichtung (100) nach einem der Ansprüche 1 bis 6 und eingerichtet, um die Karteninformationen über ein Netzwerk aus der Servereinheit zu erfassen.

8. Verkehrszustands-Benachrichtigungssystem nach Anspruch 7,
wobei die Servereinheit (160) weiterhin einen Verkehrszustands-Kartengenerator zum Erzeugen von Verkehrszustands-Karteninformationen durch Überlagern der Verkehrsinformationen an der Vielzahl vorbestimmter Zeitpunkte auf die Karteninformationen umfasst, und
wobei die Anzeigesteuereinheit (180) der Verkehrsinformations-Benachrichtigungseinrichtung eingerichtet ist, um die Anzeigeeinheit die Verkehrszustands-Karteninformationen vermittelt anzeigen zu lassen.

9. Verkehrszustands-Benachrichtigungssystem nach Anspruch 7,
wobei die Karteninformations-Erfassungseinrichtung eingerichtet ist, um die Karteninformationen über ein Netzwerk von der Servereinheit zu erfassen, und
wobei die Anzeigesteuereinheit (180) der Verkehrsinformations-Benachrichtigungseinrichtung eingerichtet ist, um die durch die Karteninformations-Erfassungseinrichtung erfassten Karteninformationen an der Anzeigeeinheit anzuzeigen und um die Verkehrsinformationen an der Vielzahl vorbestimmter Zeitpunkte auf die Karteninformationen sequentiell entlang einer Zeitreihe von dem aktuellen Moment an zu überlagern.

10. Verkehrszustands-Benachrichtigungsverfahren, das die Schritte umfasst:
Erfassen von Karteninformationen und von Verkehrsinformationen zu den Verkehrszuständen eines vorbestimmten Gebietes, das die aktuelle Position eines sich bewegenden Körpers umgibt; und
kontinuierliches Anzeigen der Karteninformationen, die zu einer Vielzahl von vorbestimmten Zeitpunkten von den Verkehrsinformationen überlagert werden, an einer Anzeigeeinheit durch Erkennen einer Anforderung nach vorhergesagten Verkehrsstauinformationen, um den Übergang des Verkehrszustandes anzuzeigen.

11. Verkehrszustands-Benachrichtigungsprogramm zum Ausführen des Verkehrszustands-Benachrichtigungsverfahrens nach Anspruch 10 auf einem Computer.

12. Datenträger zum Speichern des Verkehrszustands-Benachrichtigungsprogramms nach Anspruch 11 auf eine für einen Computer lesbare Art.

## Revendications

1. Un dispositif de notification de conditions de circulation (100) comprenant :
un dispositif d'acquisition d'information cartographique pour acquérir une information cartographique;
un dispositif d'acquisition d'information de circulation (120) pour acquérir de l'information de circulation concernant des conditions de circulation dans une zone prédéterminée entourant la position présente d'un corps mobile;
un dispositif de reconnaissance d'information de demande pour reconnaître une demande d'information d'encombrement prédite, pour visualiser une évolution des conditions de circulation; et
une unité de visualisation (140) pour visualiser l'information cartographique, **caractérisé par**
une unité de commande de visualisation (180) agencée pour commander l'unité de visualisation de façon à visualiser continuellement l'information cartographique et l'information de circulation à de multiples instants prédéterminés, d'une manière superposée, lorsque le dispositif de reconnaissance d'information de demande reconnaît la demande d'information d'encombrement prédite.

2. Le dispositif de notification de conditions de circulation (100) selon la revendication 1, dans lequel l'unité de commande de visualisation (180) génère une information cartographique de conditions de circulation dans laquelle l'information cartographique est superposée sur l'information de circulation, et visualise à des instants prédéterminés, d'une manière commutée, l'information cartographique de conditions de circulation générée.

3. Le dispositif de notification de conditions de circulation (100) selon la revendication 1, dans lequel l'unité de commande de visualisation (180) visualise l'information de circulation en succession temporelle, à partir du moment présent.

4. Le dispositif de notification de conditions de circulation (100) selon l'une quelconque des revendications 1 à 3, comprenant en outre :
un dispositif d'acquisition de position présente pour acquérir une information sur la position présente du corps mobile;
un dispositif d'acquisition d'information de destination pour acquérir une information sur la destination du corps mobile;
un dispositif de recherche d'itinéraire de déplacement pour rechercher l'itinéraire de déplacement du corps mobile, en utilisant l'information cartographique, sur la base de l'information sur la position présente et de l'information sur la destination; et
un générateur de conditions de déplacement pour générer une information sur des positions de transition du corps mobile sur l'itinéraire de déplacement, à des intervalles de temps prédéterminés, sur la base de l'information sur la position présente et de l'information cartographique,
dans lequel l'unité de commande de visualisation (180) visualise continuellement l'information cartographique et une position du corps mobile aux multiples instants prédéterminés, d'une manière superposée, sur la base de l'information sur les positions de transition.

5. Le dispositif de notification de conditions de circulation (100) selon l'une quelconque des revendications 1 à 4, dans lequel le dispositif d'acquisition d'information de circulation (120) acquiert une information de circulation contenant une information d'encombrement pour le voisinage du corps mobile, et
dans lequel l'unité de commande de visualisation (180) visualise l'information cartographique avec l'information d'encombrement superposée sur l'information cartographique.

6. Le dispositif de notification de conditions de circulation (100) selon l'une quelconque des revendications 1 à 5, dans lequel le dispositif d'acquisition d'information de circulation (120) acquiert l'information de circulation sur la base d'une information de circulation statistique obtenue en traitant de façon statistique des conditions de circulation précédentes.

7. Un système notification de conditions de circulation comprenant :
une unité de serveur (160) ayant un moyen de stockage pour stocker une information cartographique; et
le dispositif de notification de conditions de circulation (100) selon l'une quelconque des revendications 1 à 6 et agencé pour acquérir l'information cartographique à partir de l'unité de serveur, par l'intermédiaire d'un réseau.

8. Le système de notification de conditions de circulation selon la revendication 7,
dans lequel l'unité de serveur (160) comprend en outre un générateur de carte de conditions de circulation pour générer une information cartographique de conditions de circulation en superposant sur l'information cartographique l'information de circulation aux multiples instants prédéterminés, et
dans lequel l'unité de commande de visualisation (180) du dispositif de notification d'information de circulation est agencée pour faire en sorte que l'unité de visualisation visualise l'information cartographique de conditions de circulation d'une manière commutée.

9. Le système de notification de conditions de circulation selon la revendication 7,
dans lequel le dispositif d'acquisition d'information cartographique est agencé pour acquérir l'information cartographique à partir de l'unité de serveur par l'intermédiaire d'un réseau, et
dans lequel l'unité de commande de visualisation (180) du dispositif de notification d'information de circulation est agencée pour visualiser sur l'unité de visualisation l'information cartographique acquise par le dispositif d'acquisition d'information cartographique, et superposer sur l'information cartographique l'information de circulation aux multiples instants prédéterminés, séquentiellement, en succession temporelle à partir du moment présent.

10. Un procédé de notification de conditions de circulation comprenant les étapes consistant à :
acquérir une information cartographique et une information de circulation concernant les conditions de circulation dans une zone prédéterminée entourant la position présente d'un corps mobile; et
visualiser continuellement sur une unité de visualisation l'information cartographique sur laquelle est superposée l'information de circulation à de multiples instants prédéterminés, en reconnaissant une demande d'information d'encombrement prédite, pour visualiser l'évolution des conditions de circulation.

11. Un programme de notification de conditions de circulation pour exécuter sur un ordinateur le procédé de notification de conditions de circulation selon la revendication 10.

12. Un support d'enregistrement stockant, d'une manière lisible par un ordinateur, le programme de notification de conditions de circulation selon la revendication 11.
